# EUROPEAN PATENT SPECIFICATION

(11) **EP 1 446 847 B1**
(45) Date of publication and mention of the grant of the patent: **07.12.2011**
(21) Application number: 02806776.7
(22) Date of filing: 22.10.2002
(51) Int. Cl.: H01M 8/12, H01M 8/24

(54) **SOLID OXIDE FUEL CELL STACK AND PACKET DESIGNS**
FESTOXIDBRENNSTOFFZELLENSTAPEL- UND PAKETENTWÜRFE
EMPILEMENT DE PILES A COMBUSTIBLE D'OXYDE SOLIDE ET CONCEPTIONS DE PAQUET

(30) Priority: 21.11.2001 US 332521 P; 27.08.2002 US 406518 P
(43) Date of publication of application: 18.08.2004
(73) Proprietor: Corning Incorporated, Corning NY 14831 (US)
(72) Inventor: BADDING, Michael, E., Elmira, NY 14905 (US); CORTRIGHT, Jeffrey, E., Corning, NY 14830 (US); LINEMAN, David, M., Painted Post, NY 14870 (US); ST. JULIEN, Dell, J., Watkins Glen, NY 14891 (US); KETCHAM, Thomas D., Big Flats, NY 14814 (US); SUN, Yawei, Horseheads, NY 14845 (US)
(74) Representative: Sturm, Christoph
(86) International application number: PCT/US2002/033686
(87) International publication number: WO 2003/081693

(56) References cited:
- EP-A- 1 113 518
- EP-A1- 0 714 147
- WO-A-97/23006
- DE-C1- 4 430 958
- GB-A- 2 286 482
- US-A- 5 273 837
- US-A- 5 424 144
- US-A- 5 585 203
- US-A- 6 045 935

## Description

### Background of the Invention

The present invention relates to solid oxide fuel cells (SOFCs) and more particularly to designs for SOFCs wherein the electrical power generating elements comprise one or a plurality of self-contained packets connected to means for introducing gaseous fuel to the interiors of the packets and wherein the fuel cell anodes are disposed within the packets on flexible ceramic sheets forming at least portions of the packet walls.

A large number of tubular SOFC designs are known. These include long and/or flattened tube designs such as proposed by Siemens AG, zirconia tubes with banded stripes on them to form voltage building arrays as employed by the Mitsubishi Corporation, and multicell flattened tube designs as proposed by Rolls-Royce PLC.

Also known are a variety of SOFC designs utilizing planar electrolytes. These typically employ thick (0.10 mm) electrolyte plates and single anode and cathode electrodes for each plate. The repeating cell unit usually includes a massive current collector that also functions as an air/ fuel separator plate. The anodes of each cell face the cathodes of the next cell and the separator plate is required to keep the gaseous fuel and air from mixing.

Newer planar designs incorporate thick anode supported plates of 0.3-1 mm thickness supporting thinner electrolyte layers of about 5-50 microns thickness that provide higher single cell performance. These also use a repeating cell unit that usually includes a massive current collector - air / fuel separator plate. Again, the anodes face the cathodes of the next cell and the separator / interconnect plate is required to keep the gaseous fuel and air from mixing. Reference may be made to Minh, N.Q., "Ceramic Fuel Cells", J. Am. Ceram. Soc., 76, 563-588 (1993) for a further review of these and other solid oxide fuel cells and manifold designs.

Recent developments also include fuel cell stack designs incorporating thin ceramic electrolyte sheets. U.S. Patent No. 5,273,837, for example, discloses a fuel cell stack design comprising corrugated sheets of thin, flexible ceramic material which are combined to form channeled structures. The metal, ceramic or cermet conductors are bonded directly to these flexible sheets, and numerous sheets with adjacently facing anode and cathode structures are arranged in the fuel cell stack. Other designs based on flexible electrolytes are disclosed in U.S. Patent No. 6,045,935, wherein the electrolytes are provided in non-planar configurations to improve the mechanical resistance of the assemblies to thermal cycling and thermal shock.

The fracture of ceramic bodies due to sudden temperature changes and temperature gradients within the bodies is a major failure mode for ceramic materials. Accordingly ceramic products intended for use in severe thermal shock environments are made of low thermal expansion coefficient materials toavoid stress build up. Thin ceramic sheets with sufficient strength can relieve thermal shock by buckling. Corrugated thin ceramic sheet controls the buckling via the corrugation pattern.

U.S. Patent No. 5,519,191 discloses the use of thin corrugated ceramic structures as fluid heaters and other thermal shock resistant structures. These are suitably formed of flexible thin ceramics such as described in U.S. Patent No. 5,089,455, some of the latter of which are also useful as electrolytes for fuel cells. The corrugation of ceramic sheets for in-plane strain tolerance is taught in published European patent application EP 1113518.

A large fraction of the cost of an SOFC systems resides in the extensive peripheral or supporting systems required for the efficient operation of the advanced core items, i.e., the cells themselves. Typically the cost of a fuel cell stack can be as much at 50% of the system cost, with the active cells themselves making up only a fraction of the stack cost. Much of the cost of the stack is due to non-active cell components such as insulation, piping, plates, etc. In the accounting sense, the cell carries a significant "overhead" of non-active cell components.

In a typical planar SOFC design, if an individual cell plate fails, replacement of the cell plate is difficult due to permanent nature of the interconnections between the cells and the bipolar interconnects within the stack. Therefore an entire substack consisting of a multiplicity of cell plates and associated non-cell components must normally be replaced. A fuel cell stack design wherein the cell-containing packets themselves could be replaced, with only a minimum exchange of non-cell components, would offer a significant economic advantage.

Stack designs for planar SOFCs have included a range of manifolding and interconnection schemes. In one recent design, described by Siemens AG, Munich, DE, each of a number of discrete cells in an array is affixed to a separate window within a frame and operates in parallel. The frames are formed of an oxide-dispersion-strengthened "Plansee" Cr-Fe alloy (chrome-iron-yttria alloy from Metallwerke Plansee, Reutte; AT), that alloy being used for cell interconnects, for framing the zirconia-based solid oxide fuel cells, and to separate air and fuel in the bi-polar cell designs (Blum et al, Solid Oxide Fuel Cells IV, pg 163, 1995). Sealing of the cell to the frames is accomplished with a glass sealing material, as it is in some fuel cell stack designs incorporating metal frames and interconnects from Tokyo Gas Co., Ltd., Tokyo, JP (Yasuda et al, Fuel Cells - Powering the 21st Century, Fuel cell seminar, October 2000, Portland, OR, Courtesy Associates (Washington, DC), p. 574).

The assembly of planar solid oxide fuel cells utilizing a bonding approach such as described requires that ceramic electrolyte be bound to a support frame that has the appropriate thermal expansion. Ceramic electrolytes of 3 mole%-yttriapartially-stabilized zirconia composition have a average linear thermal expansion coefficient (CTE) of about 11.0 ppm/°C in the temperature range of 25-750°C. Materials having use temperatures as high as 750°C and with the required CTE are rare. Chrome-iron and Cr-Ni alloys are representative of alloys known in the art for use in fuel cell devices, both for interconnects and for framing materials. These alloy families include such metals as the above-described Plansee alloy as well as Type 446 high chrome stainless steel (see Piron et. al., Solid Oxide Fuel Cells VII (2001). p. 811) Ferritic stainless steels have average CTEs in the range of 10-12 ppm/°C (Metals Handbook (1948). Examples include Type 430 stainless steel containing 14-18% Cr, remainder Fe, with a reported CTE of about 11.2 ppm/°C and a maximum use temperature of about 815°C, as well as Type 446 stainless steel containing 23-27% Cr, remainder Fe, with a CTE of about 11.0 ppm/°C and a maximum use temperature of about 1100C. The Plansee alloys have a CTE near 11 ppm/°C, but have higher use temperatures due to yttria grain boundary pinning.

One disadvantage of chromium steel alloys in fuel cells is the tendency of the chromium to act as a "poison" to the electrodes of the fuel cell. It is well known that chromium reacts with the atmosphere inside the fuel cell at cell operating temperatures, forming volatile species that deposit on the electrodes. These deposits result in a poisoning of the fuel cell cathode, leading to a reduction in performance and eventual failure of the cell. Proposed solutions to this problem include applying LaCrO₃ cover layers or excess La₂O₃ to the La_{0.9}Sr₀.₁MnO₃ cathode layers as getter materials (Miyake et al, Solid Oxide Fuel Cells (1995), p. 100).

In addition to the chromium issue, there is a concern over the long-term stability of high chrome ferritic stainless steels that are susceptible to "sigma" formation in the 700-750°C fuel cell operating range. Sigma is a FeCr phase of varying Fe/Cr ratio depending on the base alloy composition. For the alloys of interest, the typical sigma composition is about 50% Cr and 50% Fe. The total temperature range of sigma formation is very broad, e.g., 565-980°C, but is most rapid in the 700-810°C range. Formation occurs because sigma is a thermodynamically stable phase in these temperature ranges, although phase dissolution can be accomplished by annealing.

The major impact of sigma formation on properties is a reduction in ductility and toughness. This decrease in ductility is most pronounced at lower temperatures. Thermal cycling of the fuel cell between operating temperature and room temperature may result in cracking of the metal support structure if any constraint to free movement occurs. Sigma formation also reduces the corrosion resistance of the alloys by depleting the bulk metal of Cr, and the resulting change in the composition of the base metal is likely to impact thermal expansion. Unfortunately, a survey of readily available metals indicates that, other than those discussed here, there are very few metals with CTE values near those of stabilized zirconia electrolyte materials over the temperature range of 25-750°C.
[0014a] Document DE 44 30 958 C1 discloses a solid electrolyte high-temperature fuel cell comprising a hollow body to be vertically arranged and being open to an upper end section. The hollow body comprises an anode at its inner surface and a cathode at its outer surface. The hollow body is encased by a closed element of highly heat resisting material.
[0014b] Furthermore, document WO 97/23006 A2 discloses a bipolar plate consisting of a chromium oxide-forming alloy with an electrically insulating, corrosion-reducing layer in the region of the gas guiding surfaces. The surface is electrochemically coated with metals from which is formed an oxide layer of high conductivity and low evaporation rate in comparison with a chromium oxide-forming alloy when used in the fuel cell.

### Summary of the Invention

The present invention provides new designs for SOFCs based on compliant electrolyte sheets. These designs offer high power density and improved design flexibility, the latter arising from a modular fabrication approach. In the SOFC designs of the present invention the basic building block of the power section of the cells is a fuel-supplied "packet". These packets are power-generating assemblies formed of one and preferably two solid oxide sheets. The anodes for the fuel cell are situated within the packet interior, being supported by a solid oxide sheet that additionally serves as the electrolyte layer for the assembly. The fuel cell cathodes are situated outside of the packets, being supported at positions generally opposite the anodes on the exterior surfaces of the oxide sheets. Each packet in the assembly is connected to a fuel conduit from a fuel manifold for introducing gaseous fuel to the SOFC assembly.

The electrolyte sheets incorporated in each packet will support multiple cathode and anode sections to form multiple current-generating cells on each sheet. In preferred embodiments the anode and cathode sections juxtaposed on each side of each electrolyte sheet are arranged as arrays of narrow parallel electrodes or strip electrodes forming arrays of narrow current-generating cells electrically connected in series or in parallel with the other cells on the sheet. These arrayed cell and sheet combinations, called multi-cell-sheet devices, are well suited to insure efficient cooperation with other design elements of the fuel packets of the invention.

In order to build the voltage or current capacity of packet assemblies incorporating multiple pairs of electrodes it is useful to employ electrically conducting interconnects to provide electrical series or parallel connections between the anodes and/or cathodes on each sheet section. For example, in order to build cell voltage, electrically conducting interconnects formed of electronically conducting segments filling and traversing so-called vias through the thickness of the solid oxide electrolyte sheets can link the anode-cathode pairs on the sheet in electrical series.

In a principal aspect, then, the invention is seen to reside in an electrical power-generating assembly for a solid oxide fuel cell according to claims 1 that is based on a packet element such as above described. The packet element has an enclosed interior formed at least in part by one or more compliant solid oxide sheet sections.

Electrical power from the assembly is generated via a plurality of anodes disposed within the enclosed interior and supported on the interior facing surfaces of the compliant solid oxide sheet sections, with a plurality of cathodes being supported on the opposite, exterior surfaces of the sheet sections. The cathodes and anodes are placed at locations generally opposite to each other on the opposing sides of the sheets, with the degree of electrode overlap determining the active electricity-generating area of the packet assembly.

Also included as part of these power-generating assemblies are fuel delivery means such as a fuel delivery conduit for supplying a fuel gas such as hydrogen to the enclosed interior of the packet. Electrically conductive current-carrying means electrically connected to the anodes and cathodes are also typically provided for drawing electrical current from the assembly.

In a further aspect the invention includes solid oxide fuel cell (SOFC) stack designs incorporating multiple power-generating packets such as described, assembled into a stacked power-generating fuel cell array or fuel cell stack. In these stack designs each packet forms a sub-stack incorporating two multi-cell-sheet power elements with multiple cells and interconnects. The power-producing substacks thus provided not only produce substantial voltage and power, but are easily replaced in the event of an electrical failure of any multi-cell-sheet power element or its supporting electrical or gas distribution structure.

The construction of such fuel cell stacks is conveniently facilitated in accordance with the invention utilizing packet or substack designs wherein the enclosed interior of each packet element is formed by edge-sealing opposing multi-cell-sheet power elements to rigid or semi-rigid framing elements. Thus, in these designs each sub-stack supports its own plurality of power-generating anodes and cathodes, and each framing element provides structure that not only physically supports the multi-cell-sheet fuel cell devices but also defines conduit means for the supply and exhaustion of fuel and oxidant gases to each sub-stack in the stacked fuel cell array.

### Description of the Drawings

The invention may be further understood by reference to the drawings, wherein:

Figs. 1-1b present schematic top sectional and side cross-sectional elevational views of an SOFC packet provided according to the invention;

Figs. 2-2b present schematic top plan and cross-sectional side elevational views of a framed SOFC fuel packet according to the invention;

Fig. 3 presents is an exploded view of a framed SOFC packet based on the basic packet design of Figs. 2-2b;

Fig. 4 is an exploded view of selected elements of a packet assembly;

Fig. 5. is a perspective view of the packet assembly of Fig. 4;

Fig. 6 is a perspective view of a fuel cell packet stack incorporating packet assemblies such as shown in Fig. 5;

Fig. 7 is a view of an assembled fuel cell packet stack;

Fig. 8 is a perspective view of a fuel packet frame;

Fig. 9 is a perspective view of an air frame for a packet assembly;

Fig. 10 is a plot of gas flow velocity through the fuel chamber of a fuel packet assembly;

Fig. 11 is a schematic view of the seal portion of a first frame-supported fuel packet;

Fig. 12. is a schematic view of the seal portion of a second frame-supported fuel packet;

Fig. 13 plots power output from a fuel cell packet assembly;

Fig. 14-14c presents schematic views of a stamped frame packet assembly; and

Fig. 15. presents a schematic view of an alternative stamped frame packet assembly.

### Detailed Description

The advantages of the modular packet approach to fuel cell element design over previous approaches are several. In contrast to prior art designs employing flat plate electrolytes, no separator between the fuel gas supply and the air supply is required. Effective fuel-air separation is instead achieved by the electrolyte sheet itself and the gas-tight via conductors connecting the electrodes on either side of the sheet. This simplification reduces the number of gas chambers and seals by half, with a resulting significant increase in reliability. In addition, each packet designed as herein described can be tested individually to determine its performance prior to being incorporated into a multiple-assembly fuel cell stack.

As will be outlined in more detail below, multi-cell sheet devices incorporated into the packet assemblies of the invention can be scaled as necessary to achieve useful power outputs from each stack. Generally packet outputs exceeding 10 watts, more typically exceeding 25 watts or even 50 watts will be employed, with voltage levels of 20 volts or higher being favored over higher current levels at maximum output. In general, packets of these designs will, at a minimum, retain these levels of power output after multiple (at least 5) thermal cycles to operating temperatures in excess of 700°C.

A number of different frame designs can usefully be employed for the construction of packet assemblies in accordance with the invention. For example, the frames may be constructed of machined metal parts, or stamped metal framing can be used. Further, laminated frames or framing elements incorporating combinations of metal and/or ceramic (glass, glass-ceramic and/or ceramic) materials can be used for better thermal expansion matching to the electrolyte sheets or better compatibility with other elements of the packet assembly or stack of packets.

Oxidation resistant coatings can be applied to metal framing elements or appropriate portions thereof to reduce metal oxidation and/or fuel cell contamination in use. In particular, such coatings can retard or prevent chromium transport to the supported electrodes in the cells. Examples of suitable coatings include those comprising one or more compounds selected from the group consisting of vanadates, niobates and tantalates. Also suitable are coatings formed of oxides selected from the group consisting of nickel oxide, magnesium oxide, aluminum oxide. silicon oxide, rare earth oxides such as those of Y and Sc, calcium oxide, barium oxide and/or strontium oxide.

Recesses in the framing elements can provide clearance for necessary sealing materials or optional thermal insulation materials used in packet construction, e.g., for sealing the electrolyte sheet edges to the frames, protecting the sheets from thermal damage, or providing clearance for machined stack interconnecting parts. Corrugations or curvature in the framing elements can help to accommodate dimensional changes occurring during packet or stack heat-up or cool-down.

The use of frame recesses or thermal insulation constitute effective passive mechanisms for thermal gradient control within the packet assemblies and assembly stacks. The use of multiple recess levels wherein the electrolyte sheets are edge-sealed with the deeper level of such recesses is quite effective. Additionally or alternatively, frames with recess designs providing an increasing spacing between the electrolyte sheet and frame toward the frame opening into the fuel chamber can be used. Where insulation is used in the recess between the sheet and the frame, the thickness of the insulation can be reduced as the spacing from the frame opening increases.

Other methods for controlling thermal stresses within the framed packet assemblies comprises the use of curvature in the frame or multi-cell sheet devices to improve stress compliance. In the case of the frames, the interposition of sections of corrugated metal between the frames and the electrolyte sheets of the multi-cell sheet assemblies can be advantageous. These sections can comprise thin frame extensions or separate framing elements. The corrugations use can provide uniaxial or bi-axial strain relief patterns, concentric strain relief patterns, or radial strain relief patterns.

Curvature in the electrolyte sheets and/or multi-cell sheet devices is also effective. In these assemblies, any of the frame material, the multi-cell sheet device composition, the material used for edge-sealing the electrolyte sheets to the frames, the sealing temperature used for the edge sealing, the thermal expansion coefficients of the frame, device or sealing material, and any combination thereof can be such as to impart curvature to the electrolyte sheets in the finished packet assemblies. Desirably, the curvatures imparted to the sheets will have a height to length ratio measured from the midpoint of the electrolyte sheet and to the edge-sealed periphery thereof that is in the range of 1:600 to 1:6, or about 50 to 100 microns in depth. The curvature may be toward either the anode side or the cathode side of the electrolyte sheet. As an alternative to curvature, corrugated or edge-corrugated electrolyte sheets can be used.

As the packet assemblies are combined to form packet stacks for a fuel cell installation, manifolding for the supply of air and fuel gases for the stack will be provided. Such manifolding may be internal to the framing assemblies or external thereto, as desired, and any combination of internal and external air and or fuel manifolding may be used. Additionally, for some designs, it may be useful to surround the packet or packet stack with an enclosure or container to trap and recycle any air or fuel gases that may escape the assembly.

Air and fuel flow rates and pressures may be adjusted as desired to insure the efficient operation of the stack. To avoid system stress from pressure pulses or flow interruptions, bellows or other pressure pulse reduction devices may be included in the stack design. Flow control means along the edges of the multi-cell sheet devices can also help to minimize the effect of pressure pulses in the system.

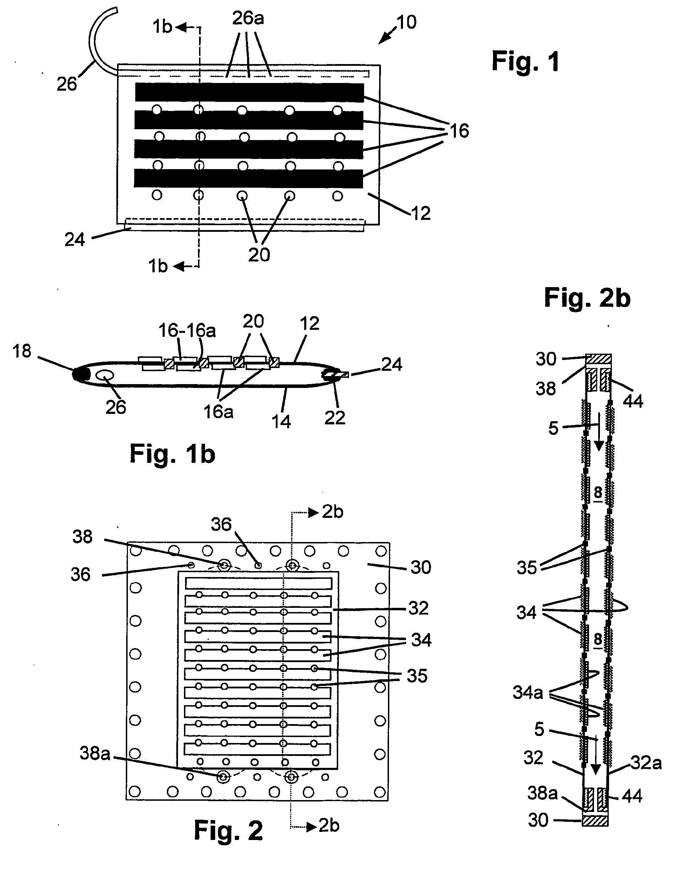

An elementary construction for a modular fuel cell packet 10 based on a multi-cell-sheet design is illustrated in Figs. 1-1b of the drawings, Fig. 1 being a top plan view and Fig. 1b a side cross-sectional elevational view of that packet. The construction shown is a cell-sheet design of four cells supported on a partially stabilized zirconia electrolyte sheet 12, the cells comprising 4 pairs of silver/palladium alloy electrodes 16-16a. The electrolyte sheet is edge-sealed along all but one edge to a second zirconia backing sheet 14, the seal being a gas-tight seal 18 formed of a conventional heat-sinterable ceramic sealing composition.

In this design each alloy electrode pair 16-16a attached to the electrolyte sheet includes an interior fuel electrode or anode 16a and an exterior air electrode or cathode 16, these being in largely overlapping positions on opposing sides of the sheet. These anode-cathode electrode pairs are connected in series by electrically conductive metal alloy vias 20 traversing the sheet from the extending edge of each anode on the interior or fuel side of the sheet to the extending edge of the next succeeding cathode in sequence on the air side of the sheet, as best illustrated in Fig. 1b.

One edge of the packet incorporates a venting seal 22 formed of a length of fibrous alumina mat 24 attached to the zirconia sheets with the ceramic sealing composition. Means for supplying a fuel gas to the interior fuel electrodes 16a include a perforated steel delivery tube comprising a plurality of gas delivery openings 26a along its length. In this simplified construction the packet incorporates only one multi-cell sheet, but similarly constructed devices wherein the zirconia backing sheet is replaced by a second multi-cell-sheet assembly with inwardly facing anodes and exteriorly facing cathodes on a supporting zirconia electrolyte sheet may also be constructed.

The multi-cell-sheet SOFC design approach above described has significant power-generating advantages, including an ability to build voltage rapidly to produce useful power from each multiple-cell-sheet device. For example, given a sheet with 100 electrode pairs, a maximum power density of 0.5 W/cm², and 500 cm² of active cell area can produce 250 W of electrical power at -50 V and 5 A. Power output at this relatively high voltage level means that relatively inexpensive leads, for example wires of relatively small cross-section, may be used, since I²R losses are minimized.

A particular advantage of the multi-cell-sheet fuel cell design is the scalability inherent in its planar via interconnect construction, which simplifies the fabrication of large-active-area sheets. The voltage-building capability of these large-area sheets permits the use of relatively small electrical power leads from each packet, so that relatively large power elements with small leads may be integrated into large fuel cell stacks through connection between only the leads of the individual power elements. Since no significant structural connections are required for the interconnection of the packet power elements, they may be treated as essentially "stand-alone" power sources where, with appropriate design, it is easy to physically separate and therefore remove and replace individual power elements from a fuel cell stack.

As previously noted, modular SOFC stack constructions are simplified utilizing edge-sealed or near-edge sealed packets consisting of opposing multi-cell-sheet devices mounted on mechanically supportive, e.g., rigid or semi-rigid, framing members by means of suitable glass, metal, composite or other seals. Such frames can provide open space between packets for air chambering, to facilitate air access to the packet cathodes. If desired, the frames can also contain internal manifolding with appropriate seals to accommodate fuel and/or air conduits for gas supply to interior and exterior surfaces of the packets. Thus channels within the frames can facilitate the introduction and exhaustion of hydrogen-containing fuel gases into and from the packets via tubes or other conduit means, with simple external manifolding only being adequate to provide gas manifold interconnections between multiple framed packets within a fuel cell stack. This again facilitates the assembly of electrical power generating packet assemblies into larger, internally manifolded SOFC stacks of any predetermined size and power output, in some cases with only single fuel, air and exhaust lines supplying the entire stack.

An illustrative example of a framed multi-cell-sheet packet design that can be used in such an assembly is schematically illustrated in Figs. 2-2b of the drawing, illustrates Referring more particularly to Fig. 2, frame element 30 formed of a refractory ferrous metal alloy serves as a support for a fuel cell packet including a first 10-cell electrode/sheet module 32, similar in design and construction to the electrode/sheet modules of Example 4, and a second sheet module 32a of the same design, attached to the opposite side of the frame. Each sheet is edge-sealed to the frame via an edge seal 44 with its cathode array 34 facing outwardly and its anode array 34a facing into the fuel chamber 8 formed by the frame and attached sheets.

Through framing element 30 are provided air conduits 36 and fuel conduits 38-38a, these conduits operating as manifold components for servicing the packet assembly (sheets and frame) with air and fuel. The air conduits 36 traverse frame element 30 with no internal side porting, so that air or oxygen flow is channeled past fuel chamber 8 with no access thereto. Fuel conduits 38-38a channel fuel gas flow through fuel chamber 8 between multi-cell-sheets 32 and 32a. With this conduit arrangement, fuel gas entering chamber 8 via conduits 38 traverses the chamber in the direction of arrows 5 wherein fuel oxidation occurs, and consumed fuel by-products are then exhausted from fuel chamber 8 via exhaust conduits 38a.

Construction of packets or fuel cell stacks utilizing frame-supported packets such as illustrated in Figs. 2-2b can be as simple as stacking the framed packets, each separated from the next by intermediate frames or spacers that allow air or oxygen access to the exposed cathodes on both sides of each packet. Particularly where oxygen or other oxidants are to be supplied to the cathode surfaces, the separators can consist of enclosing "air" frames for forming oxidant chambers, with internal or external manifolding being provided for the delivery of the oxidants to the chambers. Alternatively, each packet can be provided with integrated, manifolded air frame structures on one or both surfaces of the packet frame to provide the necessary separation from adjoining packets.

The above described packet and packet stack arrangements reflect a number of advantageous design principles. First, the packet stack approach utilizing multi-cell-sheet fuel cell arrays does not require bipolar manifolding. Pairs of devices are sealed to each other or to a frame or edge support using glass, glass-ceramic, metal, glass-metal, or cermet based sealing materials, creating a fuel "chamber" that is sealed with essentially rigid seals. Two devices so bonded create the fuel chamber that lies between the devices and the two devices plus the optional frame(s). This eliminates the need for the usual interconnect structure and an added air / fuel separator.

As noted above, the packet frames may carry internal channels that together can provide distribution manifolds for both gas and air. Gases may be fed to these distribution channels from internal or external plenums attached to the end plates, with orifices in the distribution channels provide access to the fuel or air cavities. Thus the packets can be easily assembled into stacks and disassembled for testing or repair, while at the same time the distribution of air and fuel throughout the stacks is ensured by the geometry of the component frames.

Other features of the packet and stack designs of the invention play important roles in limiting operating stresses on the devices. Primary stresses arising in the course of using these devices include thermal-mechanical and pressure-differential-induced stresses, the former being particularly problematic during device start-up and shut-down. Sources of thermal-mechanical stress include thermal expansion mismatch among packet components, thermal lag (the frame heats more slowly than the rest of the device because of thermal mass), and thermal gradients from device operation. Leakage can also be a source of thermomechanical stress in that undesired burning of fuel creates local hot spots or general heating.

The maximum temperature differential across the device can be effectively reduced by adopting a counter-flow distribution scheme for the air and fuel gases. This scheme can physically move peak packet temperatures with respect to the discharge ends of the packets. The resulting reductions in maximum temperature differentials across the packets facilitates the maintenance of a much narrower operating temperature window, thereby maximizing cell performance and minimizing material degradation. This is particularly helpful for electrode designs incorporating silver or other materials adversely affected by over-temperature cell operation. Further, avoidance of maximum temperatures at packet corners reduces biaxial stress, which is particularly difficult to control via geometric design measures such corrugation of the multi-cell-sheet electrode arrays in the packets.

A further advantage of the counter-flow design is that it provides a more uniform electrochemical driving force across the sheets, since the fuel is depleted at the air inlet packet end where the oxygen partial pressure across the membrane is a maximum. Counter-flow designs are also potentially less expensive in that they enable bi-functionality in the inlet and exit regions of the stack.

Although only one of several strategies for thermomechanical stress reduction in these devices, corrugations or other appropriately designed geometric features of the multi-cell-sheet devices remain important tools for stress management. As a group, these geometric features may be characterized as facilitating Euler buckling of the multi-cell sheets. As is known, Euler buckling is the response of a plate or beam to a compressive load (or in-plane sheer in the case of a plate) and it converts the applied stress into a bending stress. If the bend radius is kept larger than the critical bend radius then the plate will not fracture and the total stress can be effectively reduced. Euler buckling facilitated by electrolyte corrugation is particularly effective in helping to reduce in-plane stress in multi-cell-sheet devices because it reduces in-plane tension or compression and increases strain tolerance in the plane of the frame where thermally induced stress is a maximum.

Naturally it would be preferred that these devices be kept entirely free of applied strain but since they cannot be, the devices should be kept in compression in order to ensure that buckling is the main form of stress relief. This is important because buckling of flat un-corrugated sheet cannot relieve a purely tensile applied stress. The maintenance of some level of buckling and thus sheet compression in packets based on metal framing such as above described is favored if the bonding of the sheets to the frames is accomplished at temperatures at or just above the maximum operating temperatures of the devices. In this way the thermal expansion of the higher expansion frame cannot put the largely ceramic multi-cell-sheet in tension during cell operation at such temperatures. Desirably, metal frames utilized for packet construction in accordance with the invention will have average linear coefficients of thermal expansion at least equal to and up to 1.5 ppm/°C higher than the same coefficients of the electrolytes employed.

Beyond insuring that some level of buckling is maintained, the curvature radii of the buckling sheet sections must be maximized and complex curvature minimized where possible. Although the theory of buckling of thin plates in two dimensions is not fully developed, it is preferred that design elements that impose a sharp radius of curvature (such as perfectly square corners) be avoided, as should design parameters that limit the buckling or impose higher frequency, smaller-curvature bucking modes. On the other hand, seal geometry and frame geometry parameters for the design of the seal between the multi-cell-sheet device and the packet frame can be selected to purposefully pre-impart buckling concavity or convexity to the multi-cell-sheet devices. These can significantly improve the effectiveness and predictability of buckling means for stress reduction, although even the use of seal boundaries that trace out smooth curves with no sharp directional changes can be helpful.

U.S. Patent No. 6,045,935 discloses some design principles applicable to the use of corrugated ceramic elements in solid oxide fuel cell designs, and current designs for multi-cell-sheet devices draw from some of the same basic design principles. In general, the thinner the devices, the more effective are buckling mechanisms for stress reduction. This is due in part to the fact that the size of critical flaws limiting bend radius under bending of a thin plate, such as a ceramic film, can be significantly larger than that for a thick plate. In fact it is the thin cross-section of multi-cell-sheet devices that makes it possible to utilize relatively large round via holes through the electrolyte sheets without unacceptably reducing the critical bend radius of the devices, and even to utilize rigid rather than flexible seals to bond the sheet devices to their supporting metal packet frames. Nevertheless, for currently available sheet fabrication materials, preserving buckling as an effective means of stress reduction generally requires electrolyte thicknesses not exceeding about 50 microns and electrode thicknesses not exceeding about 150 microns.

As noted above, the material selected for the fabrication of packet frames in accordance with the invention should be selected with an appropriate thermal expansion coefficient, preferably one that places the attached multi-cell-sheet devices in slight compression. This still permits frame fabrication from any one of a variety of available solid materials, or alternatively from combinations of materials, including mixed frame compositions as well as laminates of thick or thin frame-forming plates formed by means such as stamping or forging. Suitable frame construction methods include powder metallurgy processes or, in the case of glass or ceramic framing members, conventional ceramics processing techniques including melting, casting, pressing, sintering, or the like. Glass, ceramic, or other non-metal frames or frame components may be selected, for example, in cases where low thermal conductivity in the frame is tolerable or desired. Frame members formed of laminates of metals are useful to tailor thermal characteristics (such as CTE) or chemical properties (such as durability). The presently preferred frames are metal, although zirconia supports and/or alumina fiber mats can be used where lower thermal conductivity or improved high temperature oxidation resistance may be desired.

Stamped thin metal plates are generally economical and can be formed with 3-dimensional structure (relief) so that gas conduits and/or gas expansion chambers can be included in plate laminations as integral parts of the formed frames. Relief in the plates can additionally form structures for heat exchange or for accurate stacking as well as for gas flow.

The use of thin, low thermal mass frames provides the added benefits of reduced thermal lag between the frame and the device and rapid overall system heat-up. Thick and thin plates, stamped components, and inserts may be employed in various combinations such as inlets formed with laminated plates and edge frames formed with single layer plates. Inserts for the frames or frame components can be used where particularly accurate geometric tolerances are needed. For example, gas inlet orifices may benefit from accurate forming to insure a uniform flow of gas into each packet. Sealing between packets may also benefit from inserts. Frames may also contain compliant structures designed to mitigate the impact of pressure pulses such as thin corrugated regions.

The use of thin stamped frames can also be a cost effective approach in that machining costs are minimized and space is not filled by metal but by air. That is, larger chamber cross-sections may be employed without incurring significant manifolding costs, although insulation and housing costs may be somewhat higher.

Although each packet for a stack such as herein described will frequently include only a single set of multi-cell-sheet devices, multiple pairs of devices may be alternatively be combined with a single frame member. Most typically this will be accomplished by sealing multiple devices into separate "windows" provided in the single frame. Frame members for such a packet design will preferably comprise separate manifolding or feedthroughs for gas inlets and outlets for each of the "windows" in the frame, and the windows will be otherwise isolated from each other. This modular approach minimizes the possibility of stack damage in the event of a crack or other physical failure of one of the multi-cell-sheet devices in the frame.

Among the most convenient and economical metal compositions for the construction of framing members are nickel based alloys and ferrous alloys that are thermally durable and approximately expansion matched to the fuel cell electrolyte sheets. Plansee^{™} alloys and high chrome steels represent examples of such metal alloys. Stainless steel alloys are particularly attractive structural materials for solid oxide fuel cell stacks operating at intermediate temperatures (∼800°C and below). Examples are high chrome alloy stainless steels such as Types 430 and 446 stainless steels, which have proven to be quite suitable.

Of course it is desirable that the frame material selected for use in packet construction not act at stack operating temperatures as a source of unwanted of contaminants: alkalis, fluorine, silica, chromium, or other species that may reduce device performance over time. The familiar problem of cell contamination by chromium from the frame material may be addressed through the use of measures such as nickel-vanadium and nickel-niobium oxide frame coatings, these substantially improving the resistance of Type 420 stainless steel alloys against chromate formation. Alternatively, silica-based glass or glass-ceramic coatings can be employed to passivate chromium, these being especially useful on the air sides of the packets where they are substantially less volatile than potentially volatile chromium species. Nickel-based coatings that may be deposited via electroless plating are particularly attractive; nickel-niobium coatings appear to be superior to oxide coatings for some applications.

The use of laminated structures as packet framing elements offers the additional advantage of thermal expansion control, i.e., close thermal expansion matching to the multi-cell-sheet devices over a relatively wide temperature range. With proper design, a laminate of two (or more) metals can be fabricated that has the desired composite CTE, by selecting metals having with expansion coefficients bracketing the target value. For a given set of metals, the relative thickness of the metals can also be varied to fine-tune the expansion coefficient of the laminate. The only constraint to this design option is laminate stress symmetry about the center of its thickness, in order to maintain sheet flatness during expansion. For this purpose individual metal thicknesses are determined based on the desired frame expansion coefficient CTE, and the expansion coefficients and Young's moduli of the individual metals.

An example of a specific laminate that could be used as a packet framing structure is a laminate of Kovar® alloy and nickel comprising a nickel core and Kovar® alloy surface layers. When designed with layer thicknesses calculated to yield an average linear coefficient of thermal expansion of 11.5 ppm/°C over the temperature range from 25-800°C, the targeted average coefficient was achieved over substantially all of the range. Slightly lower expansions at the lower end of that range (below 450°C), and slightly higher expansions at the upper end, have been attributed to the non-linear expansion of the Kovar® alloy. This performance can be improved if necessary by employing metals or alloys with more linear thermal expansion behavior, while the thermal durability of such laminates can be improved through the selection of expansion-bracketing metals more closely matched to each other in thermal expansion behavior.

Other advantages attending the use of laminated frame elements include the ability to prevent metal/ceramic electrolyte and metal/electrode interactions through the use of comparatively inert metals as laminate external layers. Such layering can effectively block cell contamination by underlying layers of the laminate. Improved bonding of multi-cell-sheet devices to frame members can also be facilitated through the selection of surfacing layers offering enhanced bonding to ceramic sealing materials.

The importance of sealing in solid oxide fuel cell designs is well understood. Most critical are the seals serving to prevent the leakage of air into the fuel chamber in the interior of the packet, although the escape of fuel into the cathode side "working" area of the fuel cell is also to be avoided. That is, the fuel/anode seals need to be particularly robust, but the air/cathode seals need not be as tight, and in fact designs can be envisioned wherein no or minimal sealing on the air side of the packets is provided. One such design for air/cathode sealing simply involves enclosing the stack assembly in a sealed or semi-sealed housing pressurized with air, so that the only loss of air from the packets is through air leakage from the housing. As a side benefit of such an approach, an external enclosure of this sort can also play a helpful role in thermal management of the stack.

The seals critical for air exclusion from the anode arrays within each packet are those made between each multi-cell-sheet device and the frame structure to which it is attached. The frame structure adjacent the seal in fact plays an important role in controlling seal stress arising from thermal gradients developed within the packets during stack operation. What is most effective for joining and sealing the thin ceramic electrolyte sheets of these devices to a frame of higher thermal mass, thermal conductivity, or heat capacity is a thermally graded, thermal shock resistant joint design.

Materials useful for forming the sheet-frame seals themselves may comprise any one of a variety of glass, glass-ceramic, metal, glass-metal, graded metal-to-glass, and graded metal-to-ceramic seals known in the art for bonding together compatible or physically incompatible metal and ceramic materials. The grading of seal expansion and mechanical properties to limit stress is, however, highly desirable. An example of a suitable graded seal is one grading from all-metal at the frame surface to metal/glass mixtures at intermediate thicknesses to all-glass, all-ceramic or all-glass-ceramic compositions at the multi-cell-sheet surface. Heat-cured composite cements such as Duralco 230 cement are examples of mixed metal/glass compositions that can be used.

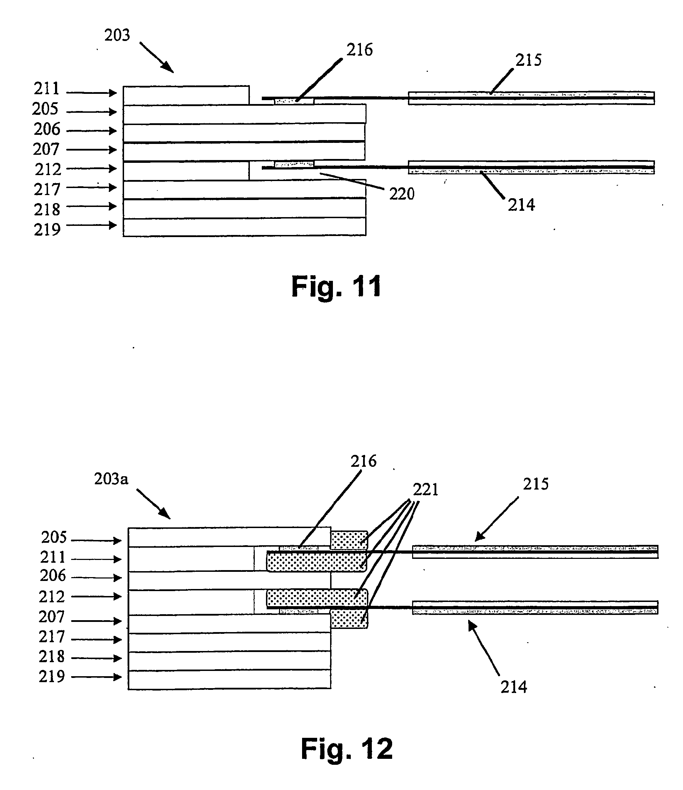

Joint design features may additionally include modifications to the edges of the multi-cell-sheet devices, to the composition or shape of the cell sheet/frame interfaces, and/or to the composition of the frames themselves. One particularly useful technique for controlling thermal gradients at the sheet /frame interface is to recess the frame/sheet joint into the frame assembly itself, so that the temperature of the sheet edge will more closely match the temperature of the surrounding frame portions. Examples of this approach are illustrated in Figs. 11 and 12 of the drawing, wherein recesses in each of frame assemblies 203 and 203a result in the overhang of predetermined widths of the edges of the electrolyte sheets 214 and 215 by elements of the framing assemblies. For best performance, this recess will be deep enough to cover the entire width of the flat edge portions, and preferably part of a sheet corrugation where a corrugated-electrolyte-based multi-cell-sheet device is used.

Another useful seal design approach is to apply a thermal insulation material such as a refractory fiber mat to the junction between the frame and the sheet. In the case of a corrugated cell sheet, insulation coverage should generally extend over the entire flat border of the sheet and into corrugated sheet sections as well. Fig. 12 of the drawing schematically illustrates a cross-section for such a junction, wherein sections of insulating fibrous mat, e.g. mat segment 221, are used to shield the exposed upper and lower edge surfaces of cell sheets 214 and 215 from inner packet frame member 206 as well as from the inside edge surfaces of upper and lower packet frame members 205 and 207. This insulation reduces the temperature gradient between the frame and sheet edge and allows the thermal contraction stress in the sheet to be relaxed by the bending / stretching of the corrugation over a reasonable distance.

Both of these joint protection strategies effectively "round" the stress concentrations arising from differing heating and cooling rates by grading the thermal environment, thus spreading the thermal expansion/contraction strains over larger volumes. It is a well known engineering principle to minimize stress concentrations by using rounded corners, with large radius / generous fillets whenever possible. Thus, for example, Robert L. Norton in "Designing to Avoid Stress Concentrations", Machine Design, An Integrated Approach, Section 2, p. 235, Prentice-Hall Inc., Simon & Schuster, Upper Saddle River NJ (1998) instructs "Avoid sharp corners completely and provide the largest possible transition radii between surfaces of different contours." Further, S. Timoshenko and Gleason H. MacCullough in "Elements of Strength of Materials", p. 29, Van Nostrand, New York (1940) teach that "...in the case of brittle materials, points of stress concentration may have a great weakening effect and such places should be eliminated or the stress concentration reduced by using generous fillets. In members subjected to reversal of stress, the stress concentration must always be considered as progressive cracks are likely to start at such points even if the material is ductile." Finally and most succinctly, J. Den Hartog in "Advanced Strength of Materials", p. 48, McGraw-Hill, N.Y. (1952) simply advises "Round Your Corners!" This principle applies directly to the designs herein described.

Notably, both of these stress reduction strategies work most effectively when the frame and sheet materials have compatible thermal expansion coefficients. This latter condition permits the portion of the sheet edge actually embedded within the joint between the frames to be largely unstressed, or mildly compressed. Designs wherein the ceramic sheet edge is under significant tensile stress should be avoided.

Another important aspect of packet stack construction involves obtaining satisfactory seals between adjacent packet frames, or between the packet frames and adjacent air frames or other structures involved in the distribution of fuel gases throughout the packet stack. The sealing of continuous fuel channels formed within the stack by the assembly of packet and air frame members is particularly important.

Seals between these metal framing members can be made by a number of methods, one such method comprising the use of "expansion seals" between adjacent frame members. A specific example of such a seal is one wherein Type 316 stainless steel ring inserts are positioned as bridging conduit members between adjacent fuel channel openings in a stack of packet frames of Type 446 stainless steel. Type 316 steel is of higher thermal expansion (18 ppm/°C) than Type 446 stainless steel (11.5 ppm/°C) so that, at a stack operating temperature of 725°C the expansion of the ring inserts against the fuel manifold channel walls of the packet frames creates a gas-tight seal between packets. In this type of seal the sealing rings can be formed of bare metal, or they may be coated with another metal, such as nickel or a corrosion resistant precious metal such as gold, to aid in ensuring a gas-tight seal.

An alternative approach to stack sealing involves the use of similar sealing rings formed of a ceramic or glass ceramic material. These materials offer the advantage that yield and creep of the insert over time at high temperatures are not significant. In any case, focusing either one of these approaches on fuel gas manifold sealing is efficient and cost effective in that the likelihood and possible extent of air/fuel mixing are reduced in direct proportion to the effectiveness of the fuel manifold seals.

An important consideration to be kept in mind where compression sealing is the selected method of stack construction is the degree of edge flatness of the packet frames, any additional air frame members, and the multi-cell-sheet edges in the vicinity of the packet seals. Imperfections in the flatness of any of these components can give rise to crack development in the thin electrolyte sheets supporting the electrode arrays. If sufficiently flat framing members are not available a suitable alternative sealing approach is to mount the multi-cell-sheet devices on suitable ceramic frames, and then to thereafter insert the framed devices into slots in a metal case.

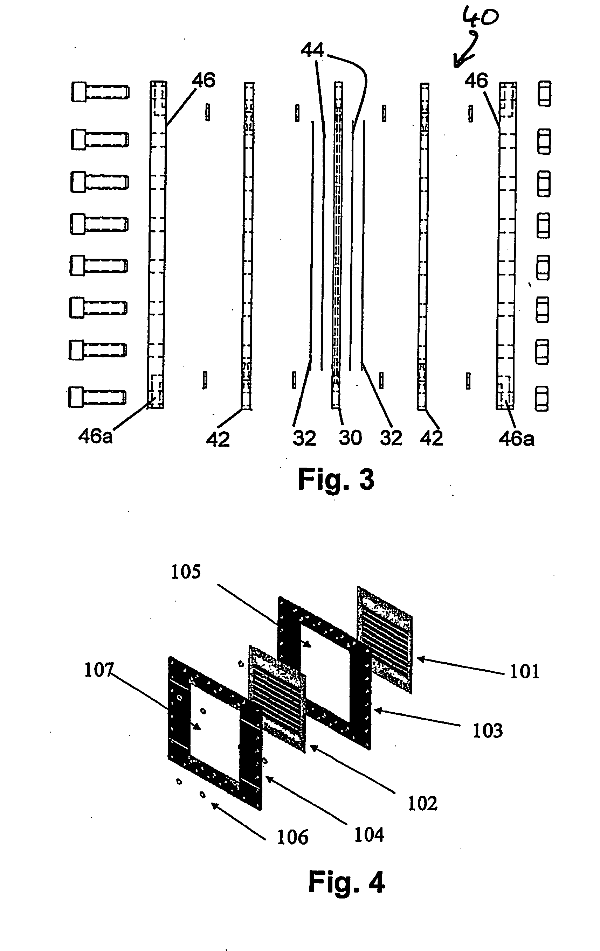

Illustrations of particular frame configurations and frame assemblies suitable for arranging into fuel cell stacks in accordance with the invention are provided in Figs. 3-9 of the drawings. Fig. 3 of the drawing presents an exploded side view of a framing assembly 40 for manifolding one or multiple frame-supported packets of this design into a fuel cell stack. In that view framing element 30 is positioned between electrolyte sheets 32 with air plates 42 being positioned for joining to the assembly on either side of the framing element 30, electrolyte sheets 32 and edge seals 44. End plates 46 are then used to join the framing element, electrolyte sheets and air plates into an integral assembly wherein frame conduits 46a provide the manifolding means for introducing fuel and air and discharging exhaust gases from the assembly.

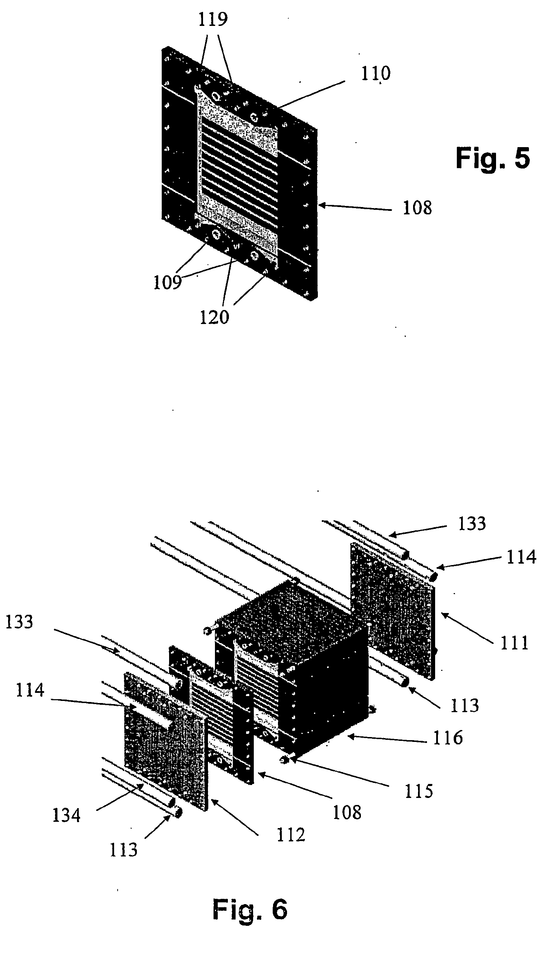

Fig. 4 is an exploded perspective view, not in true proportion or to scale, of the basic components of a multi-cell-sheet packet module of a type such as shown in Fig. 5, that module being specifically adapted for assembly with other modules of the same design to form a fuel cell stack. In the illustration of Fig. 4, two multi-cell-sheet devices 101 and 102 are positioned adjacent machined fuel packet frame 103 so that, when the edges of multi-cell-sheet devices 101 and 102 are sealed to the opposing faces of frame 103, a fuel chamber at location 105 within the space defined by the frame and sheet devices will be formed. Devices 101 and 102 are oriented so that the anodes of each device will face into the fuel chamber.

An additional module component consisting of machined plate 104 serves as an air frame for the module, forming an air chamber within the space defined by frame opening 107 when assembled. Air entering this chamber flows across the cathodes disposed on the surface of device 102 facing outwardly from the fuel chamber at 105. Air plate 104 may or may not be permanently bonded to packet fuel frame 103 as desired.

The assembled packet module, shown as module 108 in Fig. 5, forms a basic repeat unit for a fuel cell stack. These basic repeat units 108 are stacked together as shown in Fig. 6 to form a fuel cell stack 116, Fig. 6 being an exploded perspective view of such a stack, again not in true proportion or to scale. In final assembly the stack will additionally comprise end plates 111 and 112, these being bound into the unitary assembly along with the several modules 108 by means such as through-bolts 115.

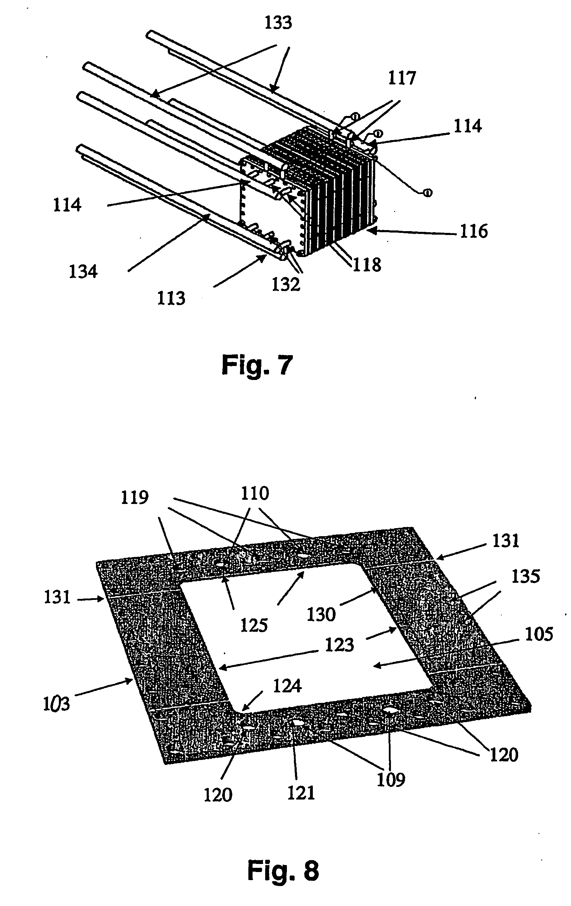

Air for the packets in this stack is suitably delivered into the air chambers of air frame openings 107 via air inlets 119 in those frames (Fig. 5), with the oxygen-depleted exhaust gases from the chamber exiting via air exhaust outlets 120.
Relieved portions of the facing surfaces of the air frames 104, more fully described below, provide gas communication and form air expansion zones (chambers) between air inlets/outlets 119/120 and the air chambers. Similarly, fuel gas is delivered into and exhausted from the fuel chambers within packet frame openings 105 by means of conduits 109 and 110, respectively, again with flow expansion as hereinafter described. To prevent any fuel gas from leaking into the air chambers, expansion washers (Figs. 6 and 7) are provided to interconnect fuel conduits 109 and 110 between adjacent air frames 104 and fuel packet frames 103 in the stack.

Air and fuel gases are supplied to both ends of the fuel cell stack by means of large external manifold/distribution tubes serving also as plenum chambers wherein inlet gas pressures are sufficiently above the pressures specified for the fuel and air chambers to assure proper gas flow through the stack. Air supply is via manifold tubes 114 from which smaller air distribution tubes 118 (Fig. 7) connect to air inlets 119 on both ends of the stack. Exhaust air from conduits 120 is withdrawn through small air collection tubes 132 and large manifold tubes 134.

Fuel supply to the stack is via manifold tubes 113 from which smaller fuel distribution tubes (not shown) connect to fuel inlets 109 on both ends of the stack.
Exhausted fuel gas from fuel exhaust conduits 110 is withdrawn through small fuel collection tubes 117 (Fig. 7) and large manifold tubes 133.

Although some of the manifolding in this case is external to the stack, the choice of internal or external manifolding may depend on the sealing approach taken for stack design, as well as matters such as system cost considerations. In the design shown in Figs. 6-9, the large volume of the external manifolding provides adequate plenum capacity to add a significant degree of buffering to changes in supply pressure (due to gas compressibility), although devices such as bellows or expansion chambers could additionally or alternatively be employed to even out pressure pulses if desired.

In the design shown in the Figures, the internal fuel and air distribution conduits 109-110 and 119-120 are of more than sufficient cross-section to enable uniform distribution between packets and limit the pressure drop from plenum to packet. A possible alternative distribution design to that shown in Figs. 6-9 would bring the gas directly from large plenum tubes to each packet with additional tubing, eliminating the internal conduits for manifolding.

The flow of air and fuel gas into the fuel and air chambers in the stack is desirably relatively uniform across the entire cathode and anode surfaces of the multi-cell-sheet devices. To regulate flow to and from each packet and to ensure both sufficient flow and flow uniformity packet to packet it is helpful to provide expansion gas chambers or zones within the frames between the fuel and air conduits and the fuel and air chambers. Such zones can function to reduce the gas velocity and spread the flow field of inlet gases so as to provide a uniform distribution across the air and fuel chambers and thus across each device before the gases enter the chambers. The underlying goal is to minimize pressure drop inlet- to-outlet and chamber-to-chamber within the stack, and to provide relatively uniform transmembrane pressures and flows so as to establish predictable and limited pressure swings at start-up and shut-down. Optimally, isobaric conditions within the packet are approached. An additional aim is to limit gas pressure and flow not by the internals of the packet but by the inlet and outlet orifice cross-sections and by the expansion chambers that follow. Thus the impact of pressure pulses on the packet is reduced.

One suitable design for gas expansion zones or chambers for a fuel packet frame is illustrated in Fig. 8 of the drawings, which is an enlarged perspective view of frame 103 of Fig. 4. In that frame design the expansion chambers comprise biscuit cuts 125 into the inside frame edges defining frame opening 105, those edges acting as the peripheral edges of the fuel chamber. The biscuit cuts provided are of a depth extending sufficiently into the width of the frame edges that they intersect and provide flow communication with fuel conduits 109 and 110, as exemplified by slotted opening 121 in conduit 109.

Channel grooves 131 provide paths for current leads to the multi-cell-sheet devices mounted on the frame, such leads being suitably insulated using inserts or encasements as hereinafter more fully described. A recess 130 is provided around the inner edge of the packet frame that is of sufficient depth so that a multi-cell-sheet device can be sealed into the frame and yet not extend upwardly above the plane of the frame surface to contact adjoining air frames. With the cell device thus overlapping the frame, the seal is generally made in the area of the recess at or near the edge of the device.

The internal surfaces of the packet frame can induce a frictional drag on the gas within the packet affecting uniform flow. This can be addressed simply by insuring that the flow limiting edge structure (edges 123 in Fig. 8) are sufficiently outside the active area of the multi-cell sheet devices to avoid flow disruption in the active area without permitting excessive by-pass.

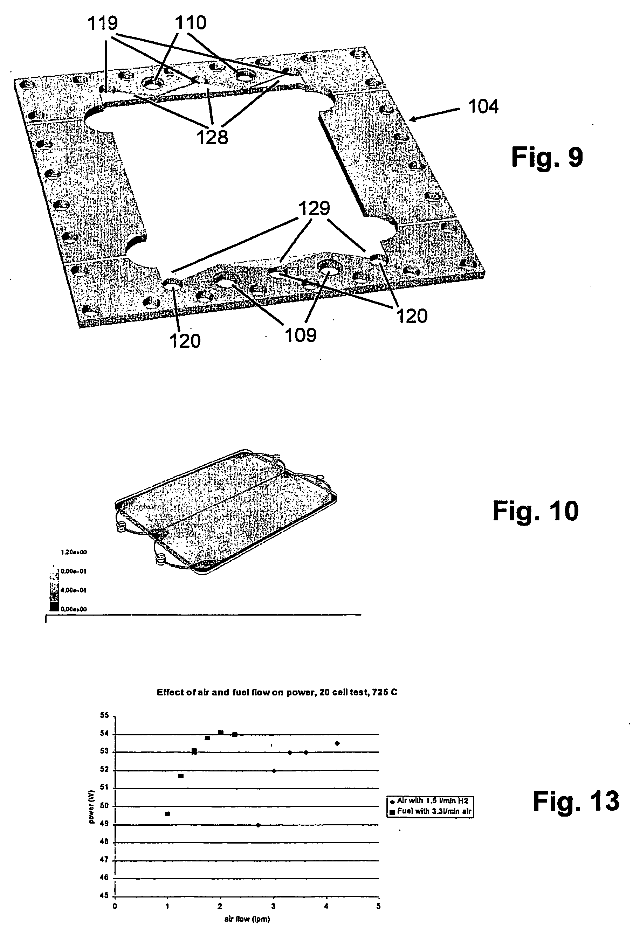

Gas expansion zones or chambers for improved air flow from the air frames are further illustrated in Fig. 9 of the drawing, which is an enlarged perspective view of air frame 104 of Fig. 4. In that design relieved portions 128 help to evenly distribute air flowing into the air chamber via air inlet conduits 119, while relieved portions 129 provide expanded zones for the collection of exhaust air into exhaust conduits 120. In both of these packet frame and air frame examples, the wedged or "biscuit" shape of the expansion zones add sufficient frictional drag to ensure uniform flow at the exit from the zones into the fuel or air chambers.

This use of multiple expansion chambers such as above described improves design flexibility and limits the need for complex internal channels of the type conventional for PEM designs and previous SOFC manifolding schemes. The effectiveness of this approach is schematically illustrated in Fig. 10 of the drawings, which is a gray scale flow diagram of the calculated flow field for a fuel gas flowing through a fuel chamber 105 within a packet frame 103 from conduits and expansion chambers of the design shown in Fig. 8 of the drawings. Further, the same approach facilitates a fuel-air counter flow gas supply arrangement (fuel and air supplied from opposite ends of the packet) as shown in stack 116 of the drawings. This makes the counter-flow design practical even for SOFC devices much larger than normally employed. Thus multi-cell-sheet devices of 12cm, 18cm, or even larger widths can be employed in stacks where, as here, multiple channels and chambers effectively provide scale-up flexibility.

Packet and stack designs are impacted substantially by the need to withstand pressure-differential-induced stresses arising in the course of fuel cell operation. Limiting the maximum gas pressure stresses developed within the packets or stacks is generally addressed by providing uniform gas flow conditions and properly designed gas chambers. Sheet-to-sheet spacings in the packet and between packets play an important role, in that smaller spacings normally involve higher gas velocities and pressures for given volumes of fuel or oxidant gases. Also to be factored in is the presence or absence of surface curvature in the multi-cell-sheet devices that might impact pressure differentials at higher gas flow rates.

U.S. Patent No. 5,273,837 discloses the use of corrugated separators to separate fuel cell layers in a stack. In the present stacks such spacing layers may in some cases be advantageous, in the air chamber or, more preferably, the fuel chamber, but are not generally required, and additionally carry the disadvantages of added drag and impediment of mass transfer to portions of the multi-cell sheets. Careful design can readily eliminate any need for separators in these stacks.

In the operation of a stack such as shown in Figs. 6-11, fuel from the fuel plenums, 113 at both ends of the stack is supplied to the stack by means of tubes such as 117 affixed to the end plates 111 and 112. The fuel then passes into the distribution channels formed by the aligned channels through the air frames and fuel packet frames and from there through the flow-limiting orifices 121, gas expansion chambers 122, and into the fuel chambers 105 to supply the anode arrays on the multi-cell-sheet devices. Partially spent fuel exits the fuel chamber through the gas expansion zone 125 and into the exhaust conduits formed by the aligned channels in the frames. In this way exhaust from all of the packets is collected and passes via tubes like those of 117 into the exhaust plenums 133.

Likewise, air enters the stack through air plenums 114 and is distributed via tubes such as 118, through the end plates to into the channels formed by the aligned openings 119 in the air frames. The air then passes through the orifices 126 and expansion zones 128 and into and across air chamber 107 where the air is partially depleted of oxygen. The depleted air then exits through gas collection zones 129 and 127 into the exhaust channels formed by the aligned channels 120 in the air frames, and from there through the end plates and via tubes 132 into depleted air plenum 134.

The use of stamped or laser cut frames or frame components is a cost effective means of manufacturing packet frames for fuel cell stacks such as hereinabove described. For example, laminated frames comprising 5 thin metal or composite layers can replace a packet fuel frame such as shown in Fig. 8, the thin plates being stacked with perforations that, when aligned, form conduit structures similar to those described above. That is, the perforations will combine to form air and fuel distribution channels that pass through all of the plate layers when stacked. Constriction orifices for the fuel and air streams distributed by these conduits can readily be provided, as can the recesses for receiving and supporting the multi-cell-sheet devices and the sealing materials used to mount those devices to the frames.

A schematic elevational cross-sectional view of one edge 203 of a laminate-framed fuel packet assembly similar in functional form to the unitary assembly of Fig. 5 is presented in Fig. 11 of the drawings. In that figure two multi-cell-sheet devices 214 and 215 are affixed to a laminated fuel frame sub-assembly 205-206-207. Surfacing plates 211 and 212 included on the frame provide a recess for the sheet devices and seals 216 that seal the sheet devices to frame surfacing layers 205 and 207. The plates 205 and 207 may be sealed to plates 211 and 212 by brazing, fusing, welding, laser welding, glass or ceramic frit, or any other means suitable for providing an essentially unitary structure, with the seals between 205, 206 and 207 being gas tight as required of a framed fuel packet. In all cases the seals bonding the laminated structure together may be provided between the plates or at the edges of the plates.

Plates may additionally be bonded to this fuel packet sub-assembly, for example to provide a modular repeat design to facilitate easy replacement and testing of individual assemblies from a stack. In packet assembly 203 in Fig. 11, for example, an integral air frame for providing an air chamber on one side of the packet sub-assembly is formed by laminated plates 217, 218, and 219. A useful feature of this design is the presence of recesses 220 formed by the combination of 207, 212 and 217, wherein layer 217 provides an overhanging frame portion for controlling thermal gradients between the sheet devices within the air and fuel chambers and the seal located within this recess. The thermal mass of the air frame layers produces more gradual temperature gradients in the seal region than are developed in the absence of such recesses.

The above-described assembly of air and fuel frame sub-assemblies forms a complete structural and functional repeat unit for the construction of a fuel cell stack of almost any desired size. Because in this construction the packet assembly is a complete and self contained unit, it is practical, and advantageous, to perform 100% independent inspections of each packet assembly for leaks or other defects before it is used in the construction a large stack.

An edge section 203a of an alternative laminated packet frame assembly is illustrated in schematic elevational cross-section in Fig. 12 of the drawings. In that arrangement the laminated fuel packet frame to which multi-cell-sheet devices 214 and 215 are sealed comprises layers 205-211-206-212-207, with recesses being formed on either side of layer 206 by the thicknesses of layers 211 and 212. However, in this design, thermal gradients in the seal region are further reduced by the insertion of segments of insulating material 221 in each of the recesses. An additional advantage is that the seals 216 in this design are positioned on the air side of the packet assembly. This arrangement can be utilized in cases where the sealing material has the potential for adversely impacting anode performance over prolonged periods of use.

The use of air and fuel packet frame assemblies for fuel cell stack assembly in accordance with the invention also offers a broader array of options for heat management and fuel stream processing than available in many other designs. For example, waste heat from the stack can be used for heating inlet gases by incorporating a heat exchanger into or proximate to a fuel manifold. Cold fuel gas flowing through the heat exchanger would thus be preheated prior to introduction into the fuel chambers in the stack.

Internal heat exchangers or other gas chambers, e.g., for fuel gas reforming, can conveniently be incorporated directly into air or packet frames through the use of metal stampings as frame layers. For example a fuel packet frame could be provided with an elongated inlet section providing chamber space between the gas expansion chamber and the fuel chamber, and that chamber space could be provided with a reforming catalyst supported on the frame surface, or with a catalyst-containing porous cellular material, wool, felt or high surface area honeycomb for increased surface area, mass transfer, or gas mixing. Similar arrangements could incorporate catalysts for partial catalytic oxidation reforming, pseudo-auto-thermal reforming and/or for steam reforming. Heat for any reaction that is endothermic could be provided by heated exhaust air in stack designs featuring counter-flow fuel-air distribution. Base metal catalysts such as Ni metal, precious metals, perovskites, and hexaluminates could be employed.

Similarly, extending the fuel exhaust chamber would provide means for partial preheating of the inlet air. Structures such as fins could be provided in frame chambers or conduits to improve heat exchange, or extruded metal honeycomb sections could be mounted therewithin.

Heat exchange may be enhanced by stamping frame laminae to create circuitous internal paths for the gases traversing frame conduits. Gas paths so formed may reside at inlet or outlet ends of the frames or along the sides so as to ensure rapid uniform heat-up of the multi-cell-sheet devices. Heat exchange may also be performed in the gas distribution chambers, e.g., by insertion of suitable materials such as cellular materials, felts, wools or extruded metal monoliths. Similar modifications of manifold feeder tubes or foil distributors also may also be used to improve heat exchange and thermal management.

Partially spent fuel may be collected in supplemental internal exhaust chambers, or alternatively burned in air to create heat. The collection approach enables recycling of some or all of the unspent fuel and steam while the latter can be employed in applications such as co-generation/HVAC or combined cycle applications, where heat production may be an important function of the system design. Exhaust chamber or conduit surfaces may be catalyzed or a catalyzed substrate, such as a coated felt or honeycomb, may be employed to reduce emissions of pollutants where spent fuel heat generation needs to be maximized. The high voltage compact nature of these stacks make them ideal for mobile applications such as APUs for portable power. The employment of low mass frame components, in combination with the thin, low thermal mass multi-cell-sheet devices, is critical for those applications where start up times must minimized.

The materials utilized for the construction of multi-cell-sheet devices include any of the materials and formulations previously known or to be identified that are suited for high temperature solid oxide fuel cell fabrication. Preferably, however, the particular materials to be employed for these stacks will be selected for optimal compatibility with the flexible electrolyte edge-sealing and framing approach needed for the efficient modular SOFC designs hereinabove described.

In general, the electrolyte sheets employed for the construction of compliant multi-cell-sheet structures will be maintained below 45 microns in thickness, preferably below 30 microns in thickness, and most preferably in the range of 5-20 microns in thickness. Flexible polycrystalline ceramic electrolyte sheets enhance both thermal shock resistance and electrochemical performance; examples of such sheets are disclosed in U.S. Patent No. 5,089,455 to Ketcham et al., hereby incorporated by reference. Examples of suitable compositions for such electrolytes include partially stabilized zirconias or stabilized zirconias doped with a stabilizing additive selected from the group consisting of the oxides of Y, Ce, Ca, Mg, Sc, Nd, Sm, Eu, Gd, Tb, Dy, Ho, Er, Tm, Yb, Lu, In, Ti, Sn, Nb, Ta, Mo, and W and mixtures thereof.

The present invention is not restricted to any particular families of electrode, current collector or cell interconnect materials. Thus structures such as are typically formed of wire or mesh of platinum, platinum alloy, silver, or other noble metal, nickel or nickel alloys can be used, as can coatings or patterned layers of these materials or materials such as strontium-doped lanthanum chromates or refractory metal cermets. These conductive structures may act as current collectors which are provided on top of, beneath, or along side electrode layers or they may act as interconnects between layers.

Among the electrode materials useful in combination with pre-sintered electrolytes are cermet materials such as nickel/yttria stabilized zirconia cermets, noble metal/ yttria stabilized zirconia cermets, these being particularly useful, but not being limited to use, as anode materials. Useful cathode materials include such ceramic and cermet materials as strontium-doped lanthanum manganite, other alkaline earth-doped cobaltites and manganites as well as noble metal/yttria stabilized zirconia cermets. Of course the foregoing examples are merely illustrative of the various electrode and interconnect materials which could be used.

Cathode and anode materials useful for fuel cell construction in accordance with the invention are preferably composed of highly conductive but relatively refractory metal alloys, such as noble metals and alloys amongst and between the noble metals, e.g., silver alloys. Examples of specific alloy electrode compositions of this type include silver alloys selected from the group consisting of silver-palladium, silver-platinum, silver-gold and silver-nickel, with the most preferred alloy being a silver-palladium alloy.

Alternative electrode materials include cermet electrodes formed of blends of these metals or metal alloys with a polycrystalline ceramic filler phase. Preferred polycrystalline ceramic fillers for this use include stabilized zirconia, partially stabilized zirconia, stabilized hafnia, partially stabilized hafnia, mixtures of zirconia and hafnia, ceria with zirconia, bismuth with zirconia, gadolinium, and germanium.

Examples of other design elements that may be included in these fuel cell packets are low resistance current collecting grids or other conductive structures provided in electrical contact with the arrayed anodes and/or cathodes. These can operate to reduce the internal resistance of the cells by reducing current distribution losses within the electrodes that would otherwise increase that resistance.

In particular implementations of the invention, the modular packet approach has been used to fabricate individual thermally shock tolerant fuel cell assemblies using flexible partially stabilized zirconia (ZrO₂-3 mole % Y₂O₃) sheets to form the packets. Where each packet incorporates multiple electrodes of the above-described silver palladium composition supported on the thin electrolyte sheets, fuel cell stacks capable of achieving power outputs of in excess of 1000 W are readily provided.

Electrical interconnections between devices can be made externally or internally as desired. And, whether an insulator or a conductor, the frames may play important roles in the circuit design of the stack. If the frame is an insulator, such as glass or glass-ceramic, then it will support electrical lead insertion without shorting. If the frame is a metal it can either participate in the circuit, for example by providing a common ground, or it may be insulated from electrical current leads by coatings, inserts, insulated tubes.

Connections may also be made between multiple multi-cell-sheet devices within a single packet. Advantageously, connections of only slight cross-section are needed due to the relatively low currents facilitated by the high voltage outputs of these devices. Suitable approaches to current collection and interconnection between electroded sheets, such as metal ceramic composite structures, are described in U.S. Patent No. 6,045,935. Other structures such as the ceramic metal laminates described in U.S. Patent No. 5,519,191 may also be employed.

Within each fuel packet, Ni metal, in the form of wire, ribbon, felt or mesh, may be employed to connect two or more multi-cell-sheet devices in series. By keeping the leads within the fuel packet, oxidizable Ni or Ni alloys may conveniently be used to bring the power from the hot device sheets to cooler points of contact. Fuel packets may be effectively extended to provide cooler points of contact by means of tubes packed with insulation, such as alumina or zirconia powder. This packing limits the leakage of fuel out of the packet. The technology employed for tube construction can be similar to that presently used for the cost-effective manufacture of insulated sealed appliance heating elements, utilizing a conductor encased in a metal tube containing MgO packing that surrounds and separates the conductor from the metal tube.

Electrical lead attachment methods that are most effective in minimizing lead attachment failures in multi-cell-sheet devices are those wherein the device power takeoffs connect with the peripheral edges of the devices, and are led out through the region where the rigid seal is made between the device and the frame. Making the connection to these leads at locations supported substantially by the device-to-frame seals, i.e., at points adjacent to or within those seals, is preferred to give the lead connections additional support and to limit the impact of thermal expansion or other external forces on the devices themselves.

It is also advantageous to employ more than one point of power take-off from each sheet device, in order to reduce the current through each take off and the distance that must be traversed from the cells to the lead connection. At lower currents, the cross-section of the take off and of the leads may be reduced so as to limit material costs and thermal stress. Positioning power take-offs along the edges of the packets rather than at the packet ends also helps to avoid gas flow disruptions at the inlet and exhaust openings of the chambers, although depending on the geometry of the electrodes, this orientation can place the long axis of the cell electrodes parallel to the flow of fuel.

In preliminary tests of multi-cell-sheet device designs, electrical power outputs of 25W are readily achieved at voltages of 5V and currents of 5A. Even for 100W devices, the maximum current will remain below this value making device-to-device connections of slight cross-section possible. The high voltage, low current feature of these devices is an obvious advantage for stack construction, as is the accompanying elimination of traditional SOFC interconnect structures that present cost and durability concerns in thermal cycling environments. The costs of the metal-filled vias and device-to-device connections of slight cross-section will be more than recovered through the avoidance of the added cost and weight of standard planar interconnect structures. Care must be taken in the selection of via materials and device processing to insure the long-term absence of leakage between air and fuel chambers, but the standard interconnect durability issues (oxidation and thermal cycling stability of the rigid join between cathode and standard interconnect) are entirely eliminated. Leakage concerns can be effectively addressed in the packet designs of the invention through the use of refractory noble metals in via filler formulations, and through measures such as the 100% quality inspection of packet assemblies as enabled by the packet approach to stack construction. The use of precious or semi-precious metals or cermets as via fillers and electrode interconnects is often preferred. Most preferred are metals, metal alloys, and cermets comprising one or more metals selected from the group consisting of silver, gold, platinum and palladium.

As is well known, the practical performance requirements of any fuel cell stack will vary significantly depending upon the application that the stack is intended to serve. Most substantially impacted by the intended application are the design lifetime of the stack and the fuel requirements that the stack design must meet. Insuring stack lifetimes of 40,000 hours imposes significantly different material requirements than lifetimes of only 5,000 hours. For example, Ag alloys are suitable components of electrode, via, and/or current collector components of these packet devices at shorter operating times and/or at lower stack operating temperatures, thus enabling lower cost solutions where only short stack lifetimes are required. On the other hand silver volatility can limit cell component lifetime at higher operating temperatures, necessitating either the periodic replacement of selected packet assemblies or the use of more refractory, but more expensive, metals such as the alloys and cermets comprising one or more metals selected from the group consisting of gold, platinum and palladium may be employed.

The invention may be further understood by reference to the following specific examples, which are intended to be illustrative rather than limiting.

### Example 1

A framed packet assembly for use in a fuel cell stack is constructed from steel framing members and multi-cell-sheet devices in accordance with a stack assembly design substantially similar to that illustrated in Figs. 6-11 of the drawings. First prepared are 3/16"-thick frames of Type 446 stainless steel, these frames being machined to provide a fuel packet frame and a pair of air frames incorporating inlet channels, orifices and air or fuel chambers substantially as described.

To the machined fuel frame thus provided are next attached a pair of multi-cell-sheet devices. The devices selected for this attachment consist of flexible 12cm by 15 cm electrolyte sheets of 3mol%Y₂O₃-partially-stabilzed ZrO₂ composition provided with a total of 540 via holes. Onto the first or anode sides of each of these sheets are deposited arrays of 10 anodes, each consisting of 6-micron-thick Ni/zrO₂ catalyst layers and 20-micron-thick layers of ceramic-powder-filled 90%Ag/10%Pd silver alloy, the powder filler consisting of 40% by weight of the 3mol%Y₂O₃/ZrO₂.

Opposite the anodes on the second or cathode sides of each flexible electrolyte sheet are deposited arrays of 10 cathodes, each consisting of 6-micron-thick layers of (La_{0.8}Sr_{0.2})0.98MnO₃ containing 40% by weight of the 3mol%Y₂O₃/ZrO₂ filler and a 20-micron-thick layer of Ag/Pd comprising 40% by weight powdered DyBiO₃ as a filler. The vias connecting the leading edge of each anode to the trailing edge of the cathode in the next succeeding anode-cathode pair are filled with 90%Ag/10%Pd alloy. The leads from the electrode arrays are silver wires within a woven fiber tube insulation. One electrolyte sheet is then sealed to each face of the fuel frame with the anode array facing inwardly into a thus-formed fuel chamber, with Duralco 230 heat curable cement being utilized to form the seals.

To the assembled fuel packet thus provided are next attached two stainless steel air frames, one being attached to each face of the fuel packet. End plates machined from Type 446 stainless steel and having openings positioned to align with the air and fuel conduits in the air frames are then attached to these air frames. Thus are formed opposing air chambers enclosing the cathode arrays on the outwardly facing surfaces of the multi-cell-sheet devices attached to the fuel frame. Finally fuel and air plenum tubing is attached to the fuel and air conduit openings in the end plates for the supply of air and fuel gases to the assembly.

In this assembly fuel and air plenums for both intake and exhaust are provided on both ends of the stack to improve pressure uniformity in the distribution channels, and the plenums are of sufficient cross-section to maintain pressure uniformity. Thus the flexible multi-cell-sheet devices are presented with minimal pressure drops from chamber inlet to exit and from air chamber to fuel chamber.

The variables which impact pressure drop from chamber inlet to exit include the cross-section of the chamber, the length of the chamber and the gas flow. Running at high gas velocities is not preferred because of the deleterious effect on pressure drop. However, the gap between devices is chosen as a compromise between enhanced mass transfer (smaller gap) and pressure drop (larger gap). The material and means of construction, for example stacked thin metal plates, are chosen to limit the impact of this gap on system cost so as to allow greater design freedom.

Modeling of this particular stack design predicts that, at a maximum air flow rate of 6 liters/minute, pressure drops are limited to no more than 27 Pascal from the air side to the fuel side and at most 2.4 Pascal from the inlet to exit across the each of the air and fuel chambers. The low pressure drop is due in part to the large flow cross-section of the fuel chamber which is approximately 3.2 mm in height for the 12 cm x 15 cm device surface area. This design also eliminates any vertical frictional elements within the air and fuel chambers (typically necessitated by the interconnect scheme of standard planar devices), such that essentially all of the pressure drop occurs across the flow constriction orifices in the frames at the inlets from the distribution conduits. That is, the total pressure drop from orifice to orifice is modeled to be 60 Pascals versus 2.4 Pascals across the chamber as reported above. The result is significantly lower frictional forces and thus a lower pressure drop both needed and enabled by the device.

To evaluate the performance of this stack, the entire assembly, including the inlet plenums and connecting tubing, is placed in an electric furnace and heated to a stack operating temperature of 725°C. A conditioning flow of forming gas (6%H₂ remainder N₂) at 720°C. is then commenced through the fuel chamber, and after a short conditioning interval, a flow of 100% hydrogen is introduced.

The response of this packet to fuel and air flow is measured at a furnace temperature of 725°C., with the data indicating 35% fuel utilization at the maximum specified flow delivery pressure with the air flow being maintained at near the stoichiometric limit. The temperature of the fuel exhaust under these conditions is about 735°C at the fuel gas exit orifice.

The peak power level observed from this stack under these operating conditions is about 54 W, that output being recorded at a voltage level of 5 V, a current level of 5.4 A per sheet, a hydrogen gas flow rate of about 2 l/min and an air flow rate of about 3.3 l/min. Fig. 13 of the drawing is a plot of representative power curves versus flow for such an assembly. The power dependence on air and fuel flow illustrated in Fig. 13 indicate a well sealed stack with no leaks and no fuel/air cross-over.

The scaleability of this packet assembly design, both with respect to the sizes of the multi-cell-sheet devices and the number of packet assemblies that can be combined into a larger stack, permits easy expansion to single stack sizes with power outputs sufficient for a wide variety of stationary or mobile applications. For example, utilizing electrolyte sheet sizes of 12 cm width and 70 cm length would accommodate 100 electrodes of 10 cm width across the sheet and 0.5 cm in length along the sheet, allowing 2 mm between each pair of electrodes. At an electrode power density of 0.5 W/cm², power output will reach 250 W from each multi-cell sheet device, or 500 W from each packet assembly. Thus a stack comprising not more than about 12 packet assemblies such as described, when joined by electrical interconnections made outside of the assemblies in a suitable electrical chassis, has a power generating capacity of approximately 5kW.

### Example 2

A four-cell packet incorporating a partially stabilized zirconia (zirconia -3 mole % yttria) electrolyte support sheet, similar in configuration to the packet depicted in Fig. 1 of the drawings, is first provided. With reference to Fig. 1, to provide this packet 10 a first pre-sintered zirconia - 3 mole % yttria electrolyte sheet 12 of approximate dimensions 10 cm x 6 cm and supporting 4 pairs of silver/palladium alloy electrodes 16-16a is fastened to the top edge of a second pre-sintered zirconia - 3 mole % yttria electrolyte sheet 14 as a backing sheet. Fastening is by means of an edge seal 18 formed from a 70:30 (parts by weight) of 230 Duralco:954 Durabond cement mixture, a commercially available material.

Each alloy electrode pair 16-16a attached to the first sheet includes an interior fuel electrode or anode 16a and an exterior air electrode or cathode 16, these being in largely overlapping positions on opposing sides of the sheet. Each of these electrodes is approximately 0.8 cm x 8 cm in size. The opposing anode-cathode electrode pairs making up these arrays are connected in series by electrically conductive vias 20 of silver-palladium alloy traversing the sheet from the extending edge of each anode on the interior or fuel side of the sheet to the extending edge of the next succeeding cathode in sequence on the air side of the sheet, as shown in Fig. 1.

The thus cemented sheets are allowed to cure at room temperature and then a second Duralco/Durabond edge seal 22 is formed along the opposing edge of the two-sheet assembly. This second seal is formed by cementing the top and bottom zirconia sheets to a length of porous alumina fiber mat 24 to provide a gas-permeable bottom closure for the packet.

A preformed stainless steel gas delivery tube 26 perforated with drilled 1 mm diameter gas delivery openings 26a along the length of an end section of the tube is next provided. This tube is inserted between the two zirconia sheets so that the gas delivery holes are positioned in the space between the sheets, and is pressed up against the cured top Duralco/Durabond seal. Since the seal is cured the tube does not attach to the top seal, but is instead slightly separated therefrom by means of a compliant alumina felt spacer, not shown. After the gas delivery tube has been positioned within the packet the remaining open ends of the packet are sealed with the Duralco/Durabond cement mixture and cured.

Following packet sealing, silver mesh electrode leads are attached at multiple points to the leading cathode (adjacent the gas supply tube), and to the vias connected to the trailing anode. Lead attachment is by means of an 80/20/27 silver-palladium-zirconia cermet ink containing an 80:20 Pd:Ag alloy powder together with a 27 wt. % addition of zirconia - 3 mole % yttria powder in an organic vehicle. This ink is cured by heating to fuse the alloy solids, and the resulting packet is then inserted into a furnace for testing.

Testing of this device is carried out by flowing a hydrogen-containing fuel gas into the packet via the gas supply tube as the packet is heated to an operating temperature of 725°C in the air atmosphere of the furnace. At that temperature, the hydrogen in the fuel gas is oxidized at the anodes, releasing electrons into the external circuit via the silver mesh contact on the top side of the packet. At the cathodes, oxygen from the furnace air is reduced via the electrons accepted from the external circuit, completing the cycle. Typical power levels generated during this test are about 0.25W/cm² of anode/cathode overlap area at 725°C using 6% H₂ forming gas as the fuel. With pure hydrogen as the fuel gas, power levels of about 9.2W are reached at this temperature, for the 4-electrode-pair sheet of this Example.

Similarly constructed devices wherein two electrode-bearing sheets are edge-sealed together to form a packet module incorporating two of the above-described anode/cathode arrays (one on each packet surface) may also be provided.

### Example 3

An eight-cell packet comprising 8 anode-cathode pairs with each electrode having a width of about 3 mm and a length of about 8 cm is prepared as described in Example I. The electrolyte support sheet consists of a flexible zirconia - 3 mole % yttria ceramic sheet about 25 micrometers in thickness. To increase the surface roughness of the sheet for reduce electrode interfacial resistance, a thin film of yittria-stabilized zirconia nano-crystals is applied to the surface of the sheet by spraying the sheet with a yttria-zirconia sol while heating the sheet on a hot plate.

The electrodes are applied to the surfaces of the thus-coated sheet by silk-screening, being formed of the zirconia-filled silver- palladium alloy employed in Example I. Vias through the sheet for the series interconnection of the electrode pairs as in Example I are formed of the same silver palladium alloy.

A flexible packet backing sheet formed of zirconia - 3 mole % yttria ceramic is then provided, this sheet having punched gas distribution holes through its thickness to provide fuel delivery and exhaust openings. To assemble a packet, this backing sheet is edge-aligned with the electrode sheet while the sheets are spaced from each other by an alumina mat edging impregnated with a glass powder slurry. The thus-aligned sheets and mat are then heated to a temperature of 900°C while a light weight is applied to the packet edges, to melt the glass and seal the sheet edges to the mat. The open chamber within the thus-formed packet has a height ranging from about 1-5 mm.

A steel gas inlet tube is next sealed into the fuel opening in the packet backing sheet, and the packet is tested as in Example I with 6% H₂ forming gas as the fuel. At a fuel cell operating temperature of 700°C the packet electrode array develops a electrical potential in excess of 7.5 volts. A packet power output of between 0.08 and 0.11 W/cm² of electrode surface area can be developed with this packet at an operating temperature of 800°C.

### Example 4

Two multi-cell packet modules, each with eight cells arranged in two four-cell columns on a wide yttria-zirconia electrolyte sheet, are fabricated. The anodes of each cell are formed of nickel zirconia cermet and the cathodes of lanthanum strontium manganate. Each electrode is provided with an overlying current-collecting silver-palladium alloy grid that is connected at its collection point to a single silver-palladium-filled via that connects the cells on each module in series.

The two cell-supporting sheets thus provided are mounted on opposite sides of a rigid alumina framing member so that the anodes of both sheets face inwardly and with full anode exposure to the chamber formed by the frame and mounted sheets. The sheets are sealed by cementing to the frame around their edges so that the only gas access to the chamber consists of a fuel gas inlet port at one end of the frame and a fuel gas exhaust port at the other end of the frame.

The fuel cell packet thus provided is tested in a furnace while supplied through a steel gas delivery tube with a fuel gas as in Example 1. An electric potential of about 8 volts is developed by the two multi-cell modules connected in series when measured at 800°C with hydrogen gas as the fuel.

### Example 5

Two fuel cell packets constructed in general accordance with the packeting procedure of Example 4, but employing ten-cell electrode/sheet modules wherein the electrodes are arranged in single-row, parallel alignment as in Fig. 1, are arrayed for testing. All electrodes in these sheet modules are composed of Ag/Pd alloy and are 0.8 mm in width, yielding an active cell area of about 80 cm² for each of the two ten-cell sheet modules in each packet. The packet frame structures for these packets are formed of seal-bonded fibrous alumina.

The packet array comprising these two packets is supplied with fuel via external manifolding, i.e., a manifolded hydrogen gas supply line including a fuel connection to each of the two packet fuel inlet ports. Compression seals consisting of alumina fiber gaskets are provided at these ports for each of the delivery conduits. When tested in this arrangement using hydrogen gas as the fuel, one series-connected 10-cell sheet module developed about 9 volts of potential at open circuit and 13 watts of power at optimum current output.

### Example 6

Packet arrays like those of Example 1, but utilizing more advanced solid framing designs, can offer further advantages in terms of achieving significant power outputs from small volumes. One particular advantage offered by metal frames is that of convenient internal fuel, oxidant, and exhaust manifolding. With properly designed frame element assemblies appropriately matched to zirconia electrolyte sheeting as to chemical compatibility and thermal expansion, internal fuel, air and exhaust manifolding can be provided that will support extended arrays of packets requiring only single fuel, air and exhaust lines to supply an entire array.

Fig. 2 of the drawing illustrates a specific example of a framing element that can be used in such an assembly. Referring more particularly to Fig. 2, frame element 30 formed of a refractory ferrous metal alloy serves as a support for a fuel cell packet including a first 10-cell electrode/sheet module 32, similar in design and construction to the electrode/sheet modules of Example 1, and a second sheet module (not shown) of the same design, attached to the opposite side of the frame. Each sheet is edge-sealed to the frame with its cathode array 34 facing outwardly and its anode array (not shown) facing into the fuel chamber (not shown) formed by the frame and attached sheets.

Through framing element 30 are provided air conduits 36 and fuel conduits 38-38a, these conduits operating as manifold components for servicing the packet assembly (sheets and frame) with air and fuel. The air conduits 36 traverse frame element 30 with no internal side porting, so air flow is channeled past the fuel chamber with no access thereto. Fuel conduits 38-38a connect to side ports for securing gas flow into the fuel chamber, such as ports 39-39a connecting to the fuel chamber beneath sheet module 32. With this manifolding arrangement, fuel traversing conduits 38 can be distributed into the fuel chamber via ports 39, while consumed fuel by-products can be exhausted from the fuel chamber via exhaust ports 39a and conduits 38a.

A frame-supported packet such as shown in Fig. 2 may be constructed utilizing, for example, a stainless steel frame of 2.5 mm thickness sealed to opposing electrode/electrolyte sheet modules of the same composition and design as the modules of Example 1. The sheet modules may be sealed to the frame utilizing a silicate glass seal. The use of a silicate seal formed predominantly between the frame and the air or cathode side of the electrode/sheet modules is helpful in reducing silicate contamination of the fuel cell anodes.

External air, fuel and electrical connections are provided for the packet described above and the packet is heated to 725 °C in a furnace. When 6% H₂ forming gas is introduced into the fuel space between the electroded sheets, greater than 20 volts of electric potential is developed at open circuit, and about 10 volts is developed at maximum power, occurring at a power density above 0.2 watts per cm² of electrode area. When pure H₂ is utilized as the fuel, peak power increases to over 0.3 watts per cm² at about 10 volts.

One useful and economic alternative to the use of machined metal framing for stack construction comprises packet assemblies formed from stamped sheet metal framing elements. These can be formed of any suitable metal and then joined together by any method forming a gas-tight seal. If desired, machined gas distribution components may be included in the assembly, for example to meet closer dimensional tolerances for final stack assembly than may be provided by stamped metal parts.

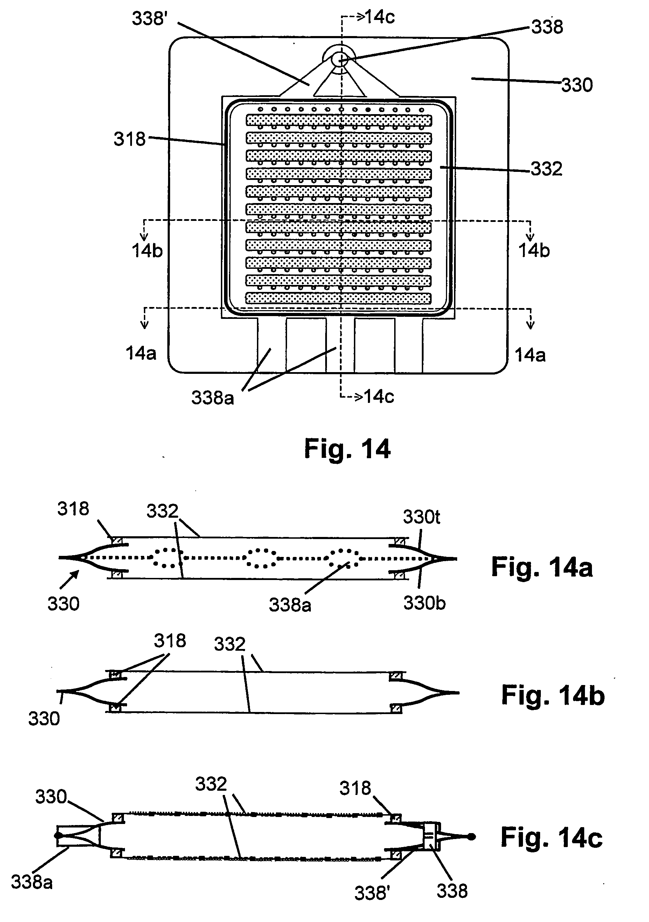

Figs. 14-14c of the drawing schematically illustrates one such assembly. In those illustrations, a stamped metal packet frame 330 consisting of upper and lower framing shells 330t and 330b joined to each other at an edge seam are provided with a machined fuel feed insert 338. The stamped frame includes integrally formed channels 338' connecting the fuel feed to the power generating multi-cell devices 332. Also incorporated in the stamped frame are three fuel outlets 338a. A seal 318 formed, for example, of an expansion- matched glass-ceramic sealing material holds the multi-cell devices 332 on framing shells 330t and 330b. The two stamped halfs of the frame can be welded or otherwise bonded together to form the packet.

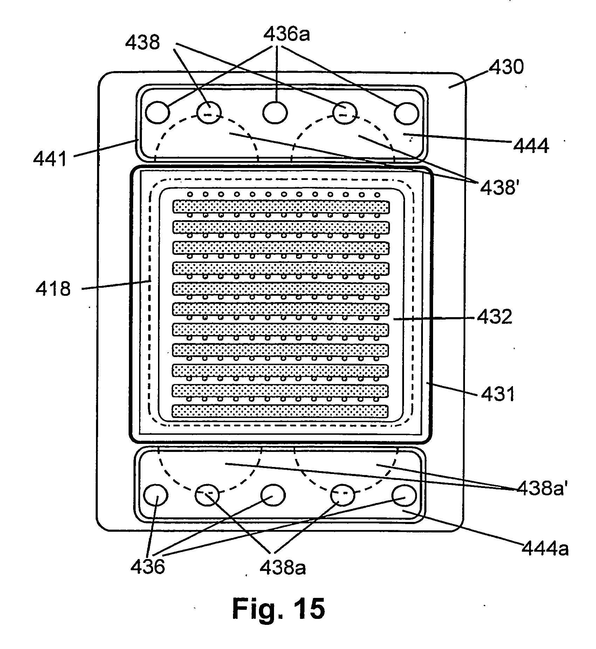

Fig. 15 comprises an alternative packet design incorporating stamped metal framing members. In that design, machined inserts are provided for each of the air holes, fuel feed hole and biscuit-cut fuel packet feed channels. In this embodiment the frame incorporates recesses for each of the multi-cell sheet devices and the machined inserts, the latter being scaled to insure good sealing between the machined inserts of adjacent packets.

Referring more particularly to Fig. 15, a stamped plate packet frame 430 incorporates two machined inserts 444 and 444a. Insert 444 comprises fuel feed channels 438 supplying fuel via biscuit cut fuel ports 438' to multi-cell sheet devices insert 444a are three air inlet holes 436, with air outlet being provided by holes 436a in insert 444. A seal 418 formed of a sealing material such as a glass-ceramic is used to seal the multi-cell sheet devices into the stamped frames. Each multi-cell sheet device 432 is disposed in a recess 431 in the stamped frame to facilitate stack assembly. Machined inserts 444 and 444a have recesses so that the stamped frame will not interfere with the sealing of the machined surfaces. The two stamped frame halves may be welded or otherwise joined together by any means providing a gas-tight packet assembly.

## Claims

1. An electrical power-generating solid oxide fuel cell assembly comprising:
a) a packet element (10) having an enclosed interior formed at least in part by one or more compliant solid oxide sheet sections (12, 14; 32, 32a);
b) a frame element (30; 103, 104; 330; 430) edge-supporting the solid oxide sheet sections (12, 14; 32, 32a);
c) a plurality of anodes (16a; 34a) disposed within the enclosed interior and supported on an interior surface of a compliant solid oxide sheet section (12, 14; 32, 32a);
d) a plurality of cathodes (16; 34) supported on an exterior surface of the compliant solid oxide sheet section (12, 14; 32, 32a) at locations generally opposite the anodes (16a; 34a) on the interior surface;
e) a fuel delivery conduit (38; 109, 110, 113; 338; 438) through the frame element (30; 103, 104; 330; 430) for supplying a fuel gas to the enclosed interior; and
f) electrically conductive means (20; 35) connected to the anodes (16a; 34a) and cathodes (16; 34) for drawing electrical current from the assembly.

2. An assembly in accordance with claim 1 wherein frame (30; 103, 104; 330; 430) incorporates passive means for controlling thermal gradients within the packet element (10), said passive means including at least one of: (a) a recess (130; 431) in the frame (30; 103, 104; 330; 430) into which a solid oxide sheet section (12, 14; 32, 32a) is sealed; (b) frame edge portions (123; 203; 203a) overhanging adjacent peripheral edge regions of the solid oxide sheet section (12, 14; 32, 32a), and (c) a thermally insulating material positioned against or proximate to a peripheral edge portion of the solid oxide sheet portion.

3. An assembly in accordance with claim 1, wherein at least some of the electrically conductive means (20; 35) traverse through said compliant oxide sheet sections (12, 14; 32, 32a).

4. A fuel cell stack (116) comprising a stacked plurality of electrical power-generating assemblies in accordance with claim 1.

5. A fuel cell stack in accordance with claim 4 further comprising at least one of: (a) external or internal manifolding incorporating gas-tight sealing elements (18, 22; 44; 216) interconnecting the fuel delivery conduits (38; 109, 110, 113; 338; 438) of the assemblies; and (b) manifolded air delivery conduits (114, 119, 120) for supplying air to the stacked plurality of assemblies.

## Patentansprüche

1. Festkörperoxid-Brennstoffzellenanordnung zur Erzeugung elektrischer Leistung, die umfasst:
a) ein Packungselement (10), das einen geschlossenen Innenraum besitzt, der wenigstens zum Teil durch einen oder mehrere konforme Festkörperoxid-Lagenabschnitte (12, 14; 32, 32a) gebildet ist;
b) ein Rahmenelement (30; 103, 104; 330; 430), das die Festkörperoxid-Lagenabschnitte (12, 14; 32, 32a) an der Kante unterstützt;
c) mehrere Anoden (16a; 34a), die in dem geschlossenen Innenraum angeordnet sind und auf einer inneren Oberfläche eines konformen Festkörperoxid-Lagenabschnitts (12, 14; 32, 32a) unterstützt sind;
d) mehrere Katoden (16; 34), die auf einer äußeren Oberfläche des konformen Festkörperoxid-Lagenabschnitts (12, 14; 32, 32a) an Stellen unterstützt sind, die sich im Allgemeinen gegenüber den Anoden (16a; 34a) auf der inneren Oberfläche befinden;
e) eine Brennstoffzufuhrleitung (38; 109, 110, 113; 338; 438) durch das Rahmenelement (30; 103, 104; 330; 430), um dem geschlossenen Innenraum Brennstoffgas zuzuführen; und
f) elektrisch leitende Mittel (20; 35), die mit den Anoden (16a; 34a) und mit den Katoden (16; 34) verbunden sind, um elektrischen Strom von der Anordnung zu ziehen.

2. Anordnung nach Anspruch 1, wobei der Rahmen (30; 103, 104; 330; 430) passive Mittel zum Steuern von Wärmegradienten in dem Packungselement (10) enthält, wobei die passiven Mittel enthalten: (a) eine Aussparung (130; 431) in dem Rahmen (30; 103, 104; 330; 430), in der der Festkörperoxid-Lagenabschnitt (12, 14; 32, 32a) eingeschlossen ist; und/oder (b) Rahmenkantenabschnitte (123; 203; 203a), die über benachbarte Umfangskantenbereiche des Festkörperoxid-Lagenabschnitts (12, 14; 32, 32a) hängen; und/oder (c) ein thermisch isolierendes Material, das an einem Umfangskantenabschnitt des Festkörperoxid-Lagenabschnitts oder in deren Nähe positioniert ist.

3. Anordnung nach Anspruch 1, wobei wenigstens einige der elektrisch leitenden Mittel (20; 35) durch die konformen Oxid-Lagenabschnitte (12, 14; 32, 32a) verlaufen.

4. Brennstoffzellenstapel (116), der mehrere gestapelte Anordnungen für die Erzeugung elektrischer Leistung nach Anspruch 1 umfasst.

5. Brennstoffzellenstapel nach Anspruch 4, der ferner umfasst: (a) äußere oder innere Verzweigungen, die gasdichte Abdichtungselemente (18, 22; 44; 216) aufweisen und die Brennstoffzufuhrleitungen (38; 109, 110, 113; 338; 438) der Anordnungen miteinander verbinden; und/oder (b) verzweigte Luftzufuhrleitungen (114, 119, 120), um den mehreren gestapelten Anordnungen Luft zuzuführen.

## Revendications

1. Ensemble de pile à combustible à oxyde solide pour la production d'électrique, comprenant :
a) un élément (10) en paquet dont l'intérieur fermé est formé au moins en partie par au moins une section (12, 14; 32, 32a) de feuille flexible d'oxyde solide,
b) un élément de châssis (30; 103, 104; 330; 430) portant le bord des sections (12, 14; 32, 32a) des feuilles d'oxyde solide,
c) plusieurs anodes (16a; 34a) placées dans l'intérieur fermé et portées sur une surface interne d'une section (12, 14; 32, 32a) de forme complémentaire des feuilles flexibles d'oxyde solide,
d) plusieurs cathodes (16; 34) portées sur une surface externe de la section (12, 14; 32, 32a) de feuilles flexibles d'oxyde solide en des emplacements de la surface interne situés globalement face aux anodes (16a; 34a),
e) un conduit d'approvisionnement en combustible (38; 109, 110, 113; 338; 438) traversant l'élément de châssis (30; 103, 104; 330; 430) pour approvisionner en gaz combustible l'intérieur fermé et
f) des moyens (20; 35) électriquement conducteurs raccordés aux anodes (16a; 34a) et aux cathodes (16; 34) qui prélèvent le courant électrique provenant de l'ensemble.

2. Ensemble selon la revendication 1, dans lequel le châssis (30; 103, 104; 330; 430) incorpore des moyens passifs qui contrôlent des gradients thermiques dans l'élément (10) en paquet, lesdits moyens passifs comprenant au moins un des éléments suivantes :
(a) un creux (130; 431) dans le châssis (30; 103, 104; 330; 430) dans lequel une section (12, 14; 32, 32a) de feuilles d'oxyde solide est scellée,
(b) des parties (123; 203; 203a) de bord de châssis surplombant les zones de bord périphérique adjacentes de la section (12, 14; 32, 32a) de feuilles d'oxyde solide et
(c) un matériau permettant une isolation thermique placé contre ou à proximité d'une partie du bord périphérique de la partie de feuilles d'oxyde solide.

3. Ensemble selon la revendication 1, dans lequel au moins certains des moyens (20; 35) électriquement conducteurs traversent lesdites sections (12, 14; 32, 32a) de forme complémentaire des feuilles flexibles d'oxyde solide.

4. Empilement (116) de piles à combustible comprenant un empilement de plusieurs ensembles de production d'énergie électrique selon la revendication 1.

5. Empilement de piles à combustible selon la revendication 4, comprenant de plus au moins un des éléments suivantes :
(a) des éléments (18, 22; 44; 216) d'étanchéité étanches aux gaz rassemblés en collecteurs internes ou externes et interconnectant les conduits (38; 109, 110, 113; 338; 438) d'approvisionnement en combustible des ensembles et
(b) des conduits (114, 119, 120) de fourniture d'air rassemblés en collecteurs et fournissant l'air aux empilements d'ensembles.
